(19) Europäisches Patentamt
European Patent Office
Office européen des brevets

(11) **EP 3 447 697 A1**

(12) **EUROPEAN PATENT APPLICATION**

(43) Date of publication:
**27.02.2019   Bulletin 2019/09**

(21) Application number: **17187587.5**

(22) Date of filing: **23.08.2017**

(51) Int Cl.:
***G06Q 10/08*** *(2012.01)*          ***G06Q 30/02*** *(2012.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Bagboard Ltd
London EC2Y 9AE (GB)**

(72) Inventor: **Ayres, Benjamin
London, EC2Y 9AE (GB)**

(74) Representative: **White, Andrew John et al
Mathys & Squire LLP
The Shard
32 London Bridge Street
GB-London SE1 9SG (GB)**

(54)   **MESSAGE DELIVERY METHOD, SYSTEM AND APPARATUS**

(57)      A computer-implemented method of delivering a series of messages across a distributed geographic area is disclosed herein. The series of message are delivered according to a timing schedule for the messages to control the timing of the delivery of the messages. The distributed geographic area comprises a plurality of retail outlets, and the series of messages are provided in packs each comprising a respective plurality of message-bearing articles.

Fig. 3

EP 3 447 697 A1

**Description**

Field of the invention

The present disclosure relates to a method, system and apparatus for delivering a series of messages across a distributed geographic area, and in particular for delivering a series of messages across a distributed geographic area according to a timing schedule for the messages to control the timing of the delivery of the messages.

Background

The distribution of messages across a distributed geographic area can be difficult. If the messages are part of a series of messages, the distribution of the messages needs to be carefully managed so that messages are not delivered across the geographic area in the wrong order of the series or at the wrong time.

Summary of the invention

Aspects of the invention are as set out in the independent claims and optional features are set out in the dependent claims. Aspects of the invention may be provided in conjunction with each other and features of one aspect may be applied to other aspects.

The present invention relates to a communication method in which physical articles bearing messages selected from a series of messages are distributed to a plurality of retail outlets. The rate of consumption of those physical articles at the retail outlets cannot of course be controlled by the distributor and it may vary over time. This may be particularly problematic when the distributor no longer wants to distribute physical articles bearing a first message from the series of messages but instead wants to distribute physical articles bearing a second message from the series of messages.

Embodiments of the present claims may address this technical problem by distributing the messages according to a timing schedule and an estimate of their lifespan at the retail outlets. A lifespan of a pack of message-bearing articles may represent the time taken for all of the message-bearing articles in that pack to be consumed, for example, the time taken for all of the message-bearing articles in a pack to be distributed at a retail location. The estimate of the lifespan of the message-bearing articles at a retail outlet may be obtained by way of data sent from the retail outlets (for example data uniquely identifying a pack of message bearing articles by way of a machine-readable identifier) obtained via distribution of those packs at that retail outlet and optionally in real-time over the course of the timing schedule. For example, the lifespan may be determined as the time difference between receipt of data sets from a retail outlet.

In one aspect of the disclosure, there is provided a computer-implemented method of delivering a series of messages across a distributed geographic area according to a timing schedule for the messages to control the timing of the delivery of the messages, wherein the distributed geographic area comprises a plurality of retail outlets, and wherein the series of messages are provided in packs each comprising a respective plurality of message-bearing articles, the method comprising:

receiving a first data set comprising information representative of an estimated lifespan of a pack of message-bearing articles at a selected retail outlet, wherein the lifespan relates to a first selected time period;

determining a first number of packs of message-bearing articles to distribute to the selected retail outlet based on the first data set;

triggering the distribution of the first number of packs to the selected retail outlet;

receiving a second data set indicating an update of the estimated lifespan of the first number of packs at the selected retail outlet;

determining a second number of packs of message-bearing articles to distribute to the selected retail outlet over a second selected time period based on the second data set and the timing schedule; and

triggering the distribution of the second number of packs to the selected retail outlet.

The series of messages may comprise at least a first message and a second message different from the first message. The timing schedule may define when to switch from the first message to the second message so that message-bearing articles carrying the second message are distributed to the retail outlets instead of message-bearing articles carrying the first message.

The timing schedule may comprise a series of (optionally consecutive) time periods. A time period may correspond to a duration of time for which each message of the series of messages is to be distributed, or may corresponding to a shorter period of time that is a subset (for example an interval of time) over which one of the messages of the series of messages is to be distributed.

The first number of packs of message-bearing articles may bear the first message and the second number of packs of message-bearing articles may bear the second message.

The second data set may be obtained over at least a portion of the timing schedule. The first data set may be obtained from a previous distribution of packs at the retail outlet. The previous distribution of packs at the retail outlet may be of packs comprising message-bearing articles bearing the first message. In some examples, receiving the second data set comprises receiving consumption data indicating when selected packs of the first number of packs of message-bearing articles are used at the selected retail outlet, and may optionally further comprise determining the time difference between the consumption of respective packs of the first number of packs of message-bearing articles at the selected retail outlet to determine the lifespan of the first number of packs. In some examples, the second data set is based on a combination of the first data set obtained over the first selected time period combined with data obtained over the course of at least a portion of the remaining period of the timing schedule.

In some examples, receiving information indicating when selected packs of the first number of packs of message-bearing articles are consumed at the selected retail outlet comprises receiving data obtained from a machine-readable identifier carried on the packs.

Determining at least one of the first number of packs of message-bearing articles and second number of packs of message-bearing articles to distribute may comprise determining the number of message-bearing articles to distribute to the selected retail outlet from among a total allocation of message-bearing articles for that message, and determining the number of packs that will provide at least the determined number of message-bearing articles.

Determining the second number of packs may comprise determining the number of message-bearing articles to distribute so that, based on the estimated lifespan of the first number of packs of the series of messages at the selected retail outlet and the timing schedule, no message-bearing articles remain at the selected retail outlet at the end of the duration of the timing schedule.

Determining the second number of packs may comprise determining the number of message-bearing articles to distribute so that, based on the estimated lifespan of the first number of packs at the selected retail outlet and the timing schedule, the number of message-bearing articles remaining at the selected retail outlet at the end of the timing schedule is greater than a first threshold number of message-bearing articles but less than a second threshold number of message-bearing articles.

Determining the second number of packs may comprise determining the number of packs to distribute to the selected retail outlet at intervals over the second selected time period, wherein each interval is less than the second selected time period, and wherein the intervals are selected so that the number of message-bearing articles at the selected retail outlet remains between a third threshold number of messages but below a fourth threshold number of messages.

The duration of the first and second selected time periods may be less than the duration of the timing schedule.

In some examples, the method further comprises:

receiving a third data set comprising information representative of an estimated lifespan of a first pack of message-bearing articles at other selected retail outlets from among the plurality of retail outlets, wherein the lifespan relates to the first selected time period;

determining a first number of packs to distribute to each of the other selected retail outlets based on the third data set;

receiving a fourth data set indicating an update of the estimated lifespan of the first number of packs at each of the other selected retail outlets;

creating a master data set representative of the estimated lifespan of the first number of packs at each of the plurality of retail outlets based on the first, second, third and fourth data sets;

determining a total number of packs to distribute to the plurality of retail outlets over the second selected time period based on the master data set and the timing schedule; and

triggering the distribution of the packs to the plurality of retail outlets.

Determining the total number of packs to distribute may comprise determining a total number of packs comprising message-bearing articles bearing the first message. Determining the total number of packs of message-bearing articles to distribute may also be based on the total number of message-bearing articles remaining at the beginning of the second selected time period.

The total number of message-bearing articles remaining at the beginning of the second selected time period may be determined based on the total number of message-bearing articles at the beginning of the first selected time period and the determined first number of packs of message-bearing articles to distribute to the selected retail outlet and each of the other selected retail outlets.

The message-bearing articles may be bags, and the messages may be advertisements printed on the bags.

In some examples the method may further comprise determining the total number of bags to print for all of the plurality of retail outlets for the second selected time period based on the master data set.

The method may also further comprise determining whether a delivery of a number of packs of message-bearing articles to a selected retail outlet is required based on the data indicating the estimated lifespan of the number of packs of message-bearing articles for the selected retail outlet.

Triggering the distribution of a number of packs of message-bearing articles may comprise distributing the packs of message-bearing articles to the retail outlets. Triggering the distribution of a number of packs of message-bearing articles may additionally or alternatively comprise franking packs of message-bearing articles for postage and/or printing the address of the stores to which the packs are to be distributed onto the packs. Such franking and printing of the address may allow an automated system for the delivery of packs of message-bearing articles to be provided.

Determining the number of packs of message-bearing articles to distribute to a selected retail outlet may comprise using a Poisson distribution to model the consumption of message-bearing articles at selected retail outlets to provide an update of the estimate of the lifespan of the packs at the selected retail outlets.

In another aspect of the disclosure there is provided an apparatus for controlling the distribution of a series of messages across a distributed geographic area according to a timing schedule for the messages, wherein the distributed geographic area comprises a plurality of retail outlets, and wherein the series of messages is provided in packs each comprising a plurality of message-bearing articles, the apparatus comprising a controller configured to perform the method of any of the previous claims.

The consumption of the message-bearing articles at a retail outlet may be modelled using a Poisson distributions.

$\mathbb{P}$ can be defined as the Poisson probability measure with a mean $T \times \sum_{i=1}^{n} \mu_i$ where T is the number of selected time periods, and $[\mu_1 \dots \mu_n]$ are the mean average bag usages per selected time period for each retail outlet, and n is the number of retail outlets. If X is chosen as a random variable representing total usage of the message-bearing articles across all retail outlets per selected time period, and $\beta$ is chose as a confidence interval (such as 99%), H (representing the number of message-bearing articles) can be determined where $\mathbb{P}\{X \leq H\} \leq 1 - \beta$ and $\mathbb{P}\{X \leq H - 1\} > 1 - \beta$. For example, in some aspects of the disclosure, determining a number of packs of message-bearing articles to distribute may comprise setting a confidence interval using a Poisson distribution and determining the number of packs of message-bearing articles to distribute to a selected retail outlet based on the confidence interval, the timing schedule and data received indicating an update of an estimated lifespan of the packs at that selected retail outlet.

If the number of packs of message-bearing articles for distribution is determined, the number of packs of message-bearing articles that need to be printed can also be determined. Because the packs of message-bearing articles may be distributed at intervals over the timing schedule, in some examples a "preservation balance" of message-bearing articles may be determined so that not all message-bearing articles are distributed at once. This may help address issues with variance in the rate of consumption over the timing schedule. The number of packs of message-bearing articles available for distribution at a selected interval/for a selected time period of the timing schedule may therefore be determined based on the total number of message-bearing articles available, minus the "preservation balance".

During the course of the timing schedule, the number of message-bearing articles consumed may vary and data may be received from the retail outlets providing an update of the estimated lifespan of packs of message-bearing articles. This may be based, for example, on their rate of consumption at the retail outlets. The number of packs of message-bearing articles to be distributed in future deliveries to the retail outlets may therefore need to be revised in order to address this change in estimated lifespan.

In some examples, the number of message-bearing articles distributed to a retail outlet may be determined based on a calculation of crossover points at either end of a confidence interval (such as a 99% confidence interval) on a Poisson distribution. Using these crossover points in this way may enable a determination of an estimate of the likely maximum number of message-bearing articles needed at a retail outlet, and an estimate of the likely minimum number of message-bearing articles needed at a retail outlet. This may be used, for example, to ensure that towards the end of a timing schedule, the correct amount of message-bearing articles are delivered to each retail outlet such that all of the message-bearing articles bearing a particular message are consumed before the timing schedule dictates that message-bearing articles bearing another message are distributed.

In some examples, the crossover points on the Poisson distribution may be used to determine a "conservative allocation" of message-bearing articles and an "extra allocation" of message bearing articles. This may be used to ensure that all retail outlets have a sufficient number of message-bearing articles to meet the lower end of the confidence interval, but that if there are any additional message-bearing articles available for distribution, these can be used as an "extra allocation", for example to selected retail outlets from the plurality of retail outlets. An example algorithm that makes use of the Poisson distribution as described above is described in more detail below.

For example, in some aspects of the disclosure, determining a number of packs of message-bearing articles to distribute may comprise determining a maximum and minimum number of packs of message-bearing articles to distribute, for example based on upper and lower confidence intervals defined by a mathematical model of the estimated lifespan of those packs, such as a Poisson distribution.

In some examples the method further comprises determining which retail outlets to distribute packs of message-bearing articles to over a selected time period based on an estimate of the lifespan of those packs and the timing schedule so as to achieve a target distribution rate of message-bearing articles across a distributed geographic area. The selected time period may correspond to the second selected time period. The estimate of the lifespan of the packs may be obtained over the first selected time period, for example so that the estimate of the lifespan of the packs is based on data previously obtained from retail outlets.

In some examples, the method may further comprise determining which retail outlets to distribute packs of message-bearing articles to in order to meet some other selected criteria. For example, a determination of which retail outlets to distribute packs to may be based on a characteristic relating to the retail outlets and/or the content of the message.

Determining which retail outlets to distribute packs of message-bearing articles to may comprise determining a smaller subset of the distributed geographic area. For example, the computer-implemented method may consider all of the retail outlets within a first geographic area. Based on an estimate of the lifespan of packs, and the timing schedule, the method may comprise determining a second geographic area (optionally smaller than the first geographic) within packs will be distributed to retail outlets to meet the target distribution rate. The second geographic area may be limited to a subset of the first geographic area - for example, if the first geographic area covered London, the second geographic area may comprise a borough or region within London. For example, the selection of the retail outlets across a distributed geographic area for distribution may be performed so that there is a broad coverage of packs of message-bearing articles across the whole geographic area, or so that specific areas of the geographic area are selected.

In some examples, specific retail outlets may have an outlet identifier identifying characteristics of that retail outlet, such as its size, location (such as address, whether the location is a prominent location), proximity to other retail outlets, type of outlet (for example, what it sells, such as food, clothes etc.), weather at that outlet, footfall at the outlet (optionally as a function of time), typical demographic and typical spend at that retail outlet. If a second geographic area is selected, this selection could be based on the outlet identifier.

In some examples, the selection of retail outlets for distribution to may be performed based on the outlet identifier and/or the content of the message or series of messages. For example, a second geographic area (for example, a subset of an initial "first" geographic area indicating all available retail outlets) for distribution to may be determined based on the outlet identifier and /or the content of the message or series of messages. For example, if the message is a message relating to products and/or services provided at a particular location, retail outlets that are near that location (as indicated by the outlet identifier, for example within a threshold distance of that location) may be selected (for example as part of a second, smaller geographic area) for distribution of the packs of message-bearing articles. In this way, the messages can be targeted to specific retail outlets that are relevant to the content of the message.

In some examples, a second set (for example, a "reserve" set) of message-bearing articles, for example carrying a reserve message not part of the series of messages, may be used if, during the course of the timing schedule, it is determined that there are not enough packs of message-bearing articles to meet demand. In such cases where it is determined that there are not enough packs of message-bearing articles to meet demand, it may be determined that packs of message-bearing articles bearing the reserve message are distributed to selected retail outlets. The selected retail outlets to which the packs of message-bearing articles bearing the reserve message are distributed to may be determined based on the outlet identifier and/or content of the message or series of messages as described above. For example, retail outlets that are determined to be closest to the location of the product or service relating to the message may be prioritised (to which it may be determined should be distributed with the message of the series) over retail outlets that are further away (to which it may be determined should be distributed with the reserve message).

In another aspect of the disclosure, there is provided a computer-implemented method of delivering a series of messages across a distributed geographic area according to a timing schedule for the messages to control the timing of the delivery of the messages, wherein the distributed geographic area comprises a plurality of retail outlets, and wherein the series of messages are provided in packs each comprising a respective plurality of message-bearing articles, the method comprising:

receiving a data set indicating an estimated lifespan of the packs of message-bearing articles at the retail outlet;
determining which retail outlets to distribute the packs of message-bearing articles to over a selected time period based on the second data set and the timing schedule so as to achieve a target distribution rate of message-bearing articles at retail outlets selected from the plurality of retail outlets across the distributed geographic area; and
triggering the distribution of the packs to the selected retail outlet.

In some examples, receiving a data set may further comprise:

receiving a first data set comprising information representative of an estimated lifespan of a pack of message-bearing articles at a plurality of retail outlets, wherein the lifespan relates to a first selected time period;

determining a first number of packs of message-bearing articles to distribute to a selected retail outlet or a plurality of selected retail outlets based on the first data set;

triggering the distribution of the first number of packs to the selected retail outlet or plurality of selected retail outlets; and

receiving a second data set indicating an updated estimate of the lifespan of the packs of message-bearing articles at the selected retail outlet or plurality of selected retail outlets; and

using the updated estimate of the lifespan for use in determining which retail outlets to distribute the packs to.

In some examples, the estimate of the lifespan at one retail outlet may be used to determine whether to distribute packs to other retail outlets (for example to retail outlets where the estimate of the lifespan of the packs may not be known).

As described above, in some examples, determining which retail outlets to distribute packs to may be based on an outlet identifier identifying characteristics of that retail outlet and optionally the content of the message.

In another aspect of the disclosure there is provided a system for distributing a series of messages across a distributed geographic area, the system comprising:

a controller configured to perform a method of the aspect of the disclosure;

a plurality of packs of message-bearing articles, wherein each pack comprises a machine-readable identifier; and

a reader for obtaining data from the machine-readable identifier carried on the packs to provide the consumption data.

In some examples the reader is configured to send the consumption data obtained from the machine-readable identifier to the controller.

In another aspect of the disclosure there is provided a computer readable non-transitory storage medium comprising a program for a computer configured to cause a processor to perform the method of any of the previous aspects.

Drawings

Embodiments of the disclosure will now be described, by way of example only, with reference to the accompanying drawings, in which:

Fig. 1 shows an example operating timeline for a system for distributing a series of messages across a distributed geographic area, such as the system of Fig. 2;

Fig. 2 shows a schematic view of a system for distributing a series of messages across a distributed geographic area;

Fig. 3 shows a flow chart for a method for distributing a series of messages across a distributed geographic area, for example via the system of Fig. 1;

Fig. 4a shows a process flow-chart for an example system for distributing a series of messages across a distributed geographic area, such as the example system of Fig. 2; and

Fig. 4b shows a key for the process flow-chart of Fig. 4a.

Specific description

Embodiments of the claims relate to a system, apparatus and method for delivering a series of messages across a distributed geographic area according to a timing schedule for the messages to control the timing of the delivery of the messages.

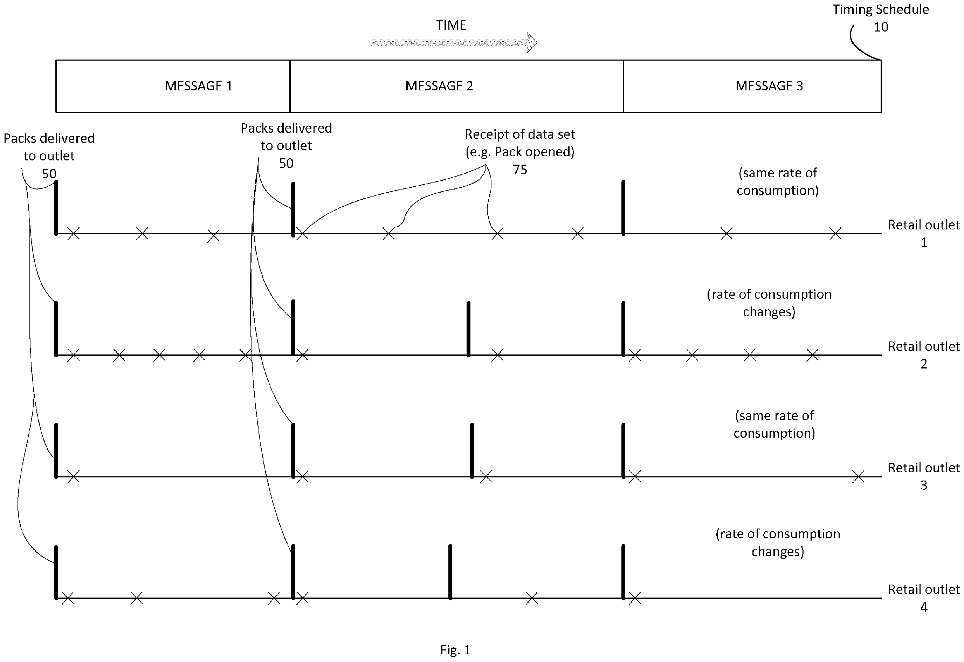

Fig. 1 shows an example operating timeline for a system for delivering a series of messages across a distributed geographic area. The timeline comprises the timing schedule 10 for the series of messages, and indicates when packs of message-bearing articles carrying the messages are delivered 50 to retail outlets across the distributed geographic area over the course of the timing schedule. The timeline also shows when a data set is received 75 from a retail outlet over the course of the timing schedule 10. The timing schedule defines when to switch from the first message to the second message so that message-bearing articles carrying the second, and in this example optionally third, messages are distributed to the retail outlets instead of message-bearing articles carrying the first message. In this example, each of the first, second and third messages are different, but in other examples some (if not all) messages may be similar or the same.

As shown in Fig. 1, the timing schedule indicates that the first message of the series of messages occupies a first time period, the second message of the series of messages occupies a second time period, and the third message of the series of messages occupies a third time period. In this example the time periods for the first, second and third messages are consecutive (so that the time period for a message begins the moment the time period for a previous message ends), although in other examples it will be understood that there may be gaps between the time periods for messages so that there may be a gap in time when no messages are delivered across the distributed geographic area.

In the example shown in Fig. 1, the time period for each message is different, with the time period for message 2 being longer than the time period for messages 1 and 3. However, it will be appreciated that in other examples the time periods for all the messages of a series may be the same.

For retail outlet 1, it can be seen that there is a first delivery 50 of a number of packs at the outlet at the start of each time period for a new message. Each pack comprises a plurality of message-bearing articles bearing the message for that time period. So for the example shown in Fig. 1, for retail outlet 1, the first delivery 50 of packs comprises message-bearing articles bearing the first message, the second delivery 50 of packs comprises message-bearing articles bearing the second message, and the third delivery 50 of packs comprises message-bearing articles bearing the third message.

The number of packs in the first delivery 50 to the first retail outlet may be based on a previous estimate of a lifespan for the packs at that outlet over a selected time period, such as a time period corresponding to the time period for the first message in the series of messages. This previous estimate of the lifespan may have been received before the timing schedule began. Using the estimate of the lifespan of the packs at retail outlet 1, number of packs in the first delivery 50 of packs of message-bearing articles can be determined to be estimated to contain enough packs to last the duration of the time period for the first message.

Over the course of the timing schedule, a data set or sets are received 75 from each outlet. The data sets comprise information representative of an estimate of the lifespan of packs of message-bearing articles at that outlet. For example, a data set may be received 75 every time a new pack of message-bearing articles is used (for example, every time a new pack is opened) at that retail outlet. Based on the time difference between when one pack is opened and another is opened, an estimate for the rate of consumption (and thereby the lifespan) of message-bearing articles at that retail outlet can be determined.

In the example shown in Fig. 1, for retail outlet 1, three data sets are received over the course of the time period for the first message, for example because three packs of message-bearing articles were opened and consumed over this time period. These data sets received over the course of the time period for the first message may be used to update the estimate of the lifespan of packs of message-bearing articles at that retail outlet over a first selected time period. In this example, the first selected time period corresponds to the time period for the first message, although in other examples the first selected time period may correspond to shorter or longer time periods, for example the first selected time period may correspond to the time period between the points in time when a data set from a retail outlet is received 75.

This update of the lifespan of packs of message-bearing articles at retail outlet 1 over this first selected time period may then be used to determine how many packs to deliver 50 to that retail outlet over a second selected time period, which in this case may correspond to the duration of the time period for the second message (even though the duration of the time period for the second message is different to the duration of the time period for the first message). Of course, as with the first selected time period, the second selected time period may correspond to shorter or longer time periods, it may correspond to the first selected time period, and/or may again correspond to the time period between the points in time when a data set from a retail outlet is received 75.

Using this update of the estimate of the lifespan of packs at that retail outlet, the number of packs of message-bearing articles bearing the second message delivered to the first retail outlet at the beginning of the time period for the second message may be estimated to be enough to last the duration of the second selected time period. In the example shown in Fig. 1, because three packs were consumed at retail outlet 1 over the first message period, four packs are delivered to retail outlet 1 for the second message period as the second message period is longer than the first message period. It will be appreciated that in some examples an estimate lifespan of packs at one retail outlet over a first selected time period may be used to determine the number of packs to deliver to another (different) retail outlet over a second selected time period. This may be advantageous particularly in cases where it is not possible to receive 75 data sets from those other retail outlets.

In the example shown in Fig. 1, data sets indicating the rate of consumption (and therefore the lifespan) of the packs at all four retail outlets are still received 75 over the second selected time period (corresponding to the duration of the second message). These data sets may be used to again provide an update of the estimated lifespan of packs at each respective retail outlet, which may be used to determine how many packs to deliver 50 to each respective retail outlet for the third message period. For example, the data sets received 75 over one selected time period (such as the second message period) may be combined and averaged with a data set received 75 over another time period (such as the first message period).

For some retail outlets, there may be more than one delivery 50 of packs over the course of a selected time period (such as a message period), and/or the rate of consumption of message-bearing articles (and therefore the lifespan of packs) at a retail outlet may vary (for example, due to seasonal fluctuations or unexpected surges in demand) over the course of a selected time period (such as a message period).

In the example shown in Fig. 1 for the retail outlet 2, it can be seen that data sets are received more frequently over the time period for the first message than over the same time period for retail outlet 1. Because in this example a data set is received when a pack is opened at that retail outlet, it can be inferred (assuming a new pack is opened only when all the message-bearing articles in a previous pack are consumed) that the lifespan of a pack at retail outlet 2 is shorter than the lifespan of a pack at retail outlet 1. Accordingly, for a second selected time period (such as the time period for the second message), it may be determined that more packs need to be delivered to retail outlet 2. This greater number of packs may be delivered in a single delivery 50, or an additional delivery 50 over the course of the second selected time period may be scheduled (as shown in Fig. 1) to account for the updated (in this case shorter) estimate of the lifespan. These additional deliveries may be scheduled in "real-time" if it is determined that, based on a update of the estimated lifespan, a retail outlet will run out of message-bearing articles.

Receiving 75 the data sets from the retail outlets and updating the estimate of the lifespan of packs at those retails outlets in this way may account for variations and fluctuations in the rate of consumption of message-bearing articles at those retail outlets. Spreading the deliveries out over the course of a selected time period may be desirable to help ensure that existing packs are opened and consumed before new packs are delivered and/or to better manage the distribution of packs in real-time.

For retail outlets 1 and 2, a number of data sets received 75 from the retail outlets are used to provide an update of the estimate of the lifespan of a number of packs at that retail outlet. However, in other examples, only one data set may be used to provide an update of the estimate of the lifespan of a number of packs at that retail outlet. For example, as can be seen in Fig. 1, for retail outlet 3, only one data set is received over the duration of the time period for the first message. This could be because the pack size delivered to retail outlet 3 is greater than that delivered to the other retail outlets (for example, more message-bearing articles are contained in each pack), and/or it could be because the rate of consumption of message-bearing articles at that retail outlet is lower than at other retail outlets.

In some examples, the pack size of a delivery to a retail outlet (such as retail outlet 3) may be determined based on an update of the estimated lifespan of a first number of packs at that retail outlet over a first selected time period. For example, if the rate of consumption at a retail outlet is lower than expected, a second delivery of packs may contain packs with fewer message-bearing articles than a previous delivery so that not too many message-bearing articles are delivered to that retail outlet.

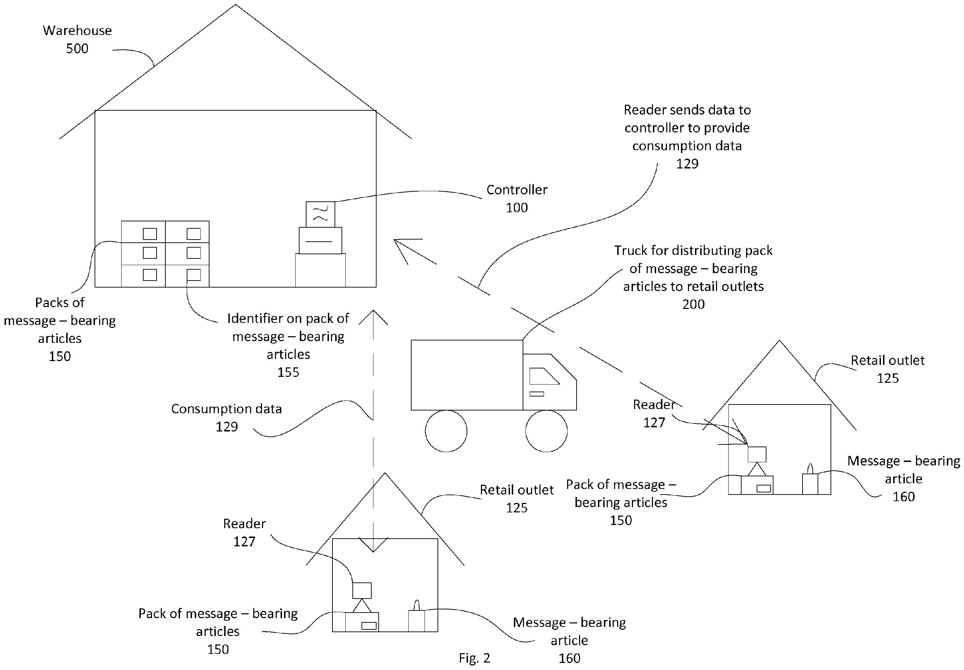

Fig. 2 shows an example system for distributing a series of messages across a distributed geographic area, for example according to the timeline of Fig. 1. In the example shown, the messages are delivered from a warehouse 500 to a plurality of retail outlets 125 across a distributed geographic area. The distributed geographic area may be a region or part of a city (for example a street or borough), or may be a larger geographic area, for example the distributed geographic area may encompass a region (for example a county or state) of a country.

The example system of Fig. 2 comprises a controller 100 in the warehouse 500 for controlling the delivery of the messages carried on message-bearing articles 160 according to a timing schedule for the messages. In the examples shown, the messages are advertisements and the message-bearing articles 160 are paper bags. The advertisements are printed on the paper bags and are provided in packs 150. Each pack 150 comprises a machine-readable identifier identifying that pack 150. In the example shown, each pack 150 comprises 25 bags. Each advertisement has a "time-to-live" defined by the timing schedule and the time period for that message.

In the example shown there is a plurality of retail outlets 125 for receiving the message-bearing articles 160. The message-bearing articles 160 will be supplied to consumers who buy products at the retail outlets 125. At each retail outlet 125 there is a reader for obtaining data from the machine-readable identifier 155 carried on the packs 150 to provide consumption data when a pack 150 is used (for example, opened).

The series of messages comprises at least a first message and a second message different from the first message. For example, the first message could be a first advertisement and the second message could be a second advertisement. For example, the first advertisement could be an advertisement for autumn and the second advertisement could be an advertisement for winter. Additionally or alternatively, the first advertisement could be advertising a first product and the second advertisement could be advertising a second product.

In the warehouse 500 there are a plurality of packs 150 of message-bearing articles. The plurality of packs 150 comprise a first number of packs 150 of message-bearing articles 160 and a second number of packs 150 of message-bearing articles 160. The first number of packs 150 of message-bearing articles 160 bear the first message and the second number of packs 150 of message-bearing articles 160 bear the second message.

The timing schedule defines when to switch from the first message to the second message so that message-bearing articles 160 carrying the second message are distributed to the retail outlets 125 instead of message-bearing articles 160 carrying the first message. For example, the timing schedule could define that the first message should be displayed on all message-bearing articles 160 for a first selected time period such as two weeks, and at the end of the first selected time period (i.e. at the end of those two weeks) that no message-bearing articles 160 bearing the first message should be given to consumers at retails outlets 125, and instead only message-bearing articles 160 bearing the second message should be supplied to consumers for the next two weeks (i.e. over a second selected time period).

The duration of the first and second selected time periods is less than the duration of the timing schedule. The duration of the first and selected time periods may be the same (such as two weeks) or they may be different.

The distribution of the message-bearing articles 160 to the retail outlets 125 therefore needs to be carefully managed so that at the end of the first selected time period there are no more message-bearing articles 160 so that the wrong message-bearing articles 160 are not supplied to customers of the retail outlets 125. Equally, the distribution of the message-bearing articles 160 needs to be carefully managed so that there are enough message-bearing articles 160 bearing the first message up until the end of the first selected time period. This technical problem of managing the distribution of the message-bearing articles 160 to the retail outlets 125 is discussed in more detail below.

The reader 127 in each retail outlet 125 is configured to send the consumption data obtained from the machine-readable identifier 155 on each pack 150 of message-bearing articles 160 to the controller 100 in the warehouse. The consumption data may form a first data set representative of an estimated lifespan of a pack 150 of message-bearing articles 160 at that retail outlet 125.

The controller 100 is operable to receive this data and runs an algorithm (as will be described in more detail below) to determine a first number of packs 150 of message-bearing articles 160 to distribute to the retail outlets 125 and/or to (other) selected retail outlets 125 based on this data. The controller 100 is then operable to trigger the distribution of this first number of packs 150 of message-bearing articles 160 to the retail outlets 125. For example, the controller 100 may cause the message-bearing articles 160 to be printed and bundled into packs 150 and loaded onto a truck 200 for distribution to the retail outlets 125.

The controller 100 is also operable to receive further data (such as a second data set) from the retail outlets (such as real-time consumption data of the packs 160) that indicate an update of the estimated lifespan of the packs at the retail outlets 125. Based on this update of the estimated lifespan of the packs 150 at the retail outlets 125 and the timing schedule the controller 100 is operable to determine a second number of packs 150 of message-bearing articles 160 to distribute to each retail outlet 125 over a second selected time period and trigger the distribution of the second number of packs 150 to the retail outlets 125.

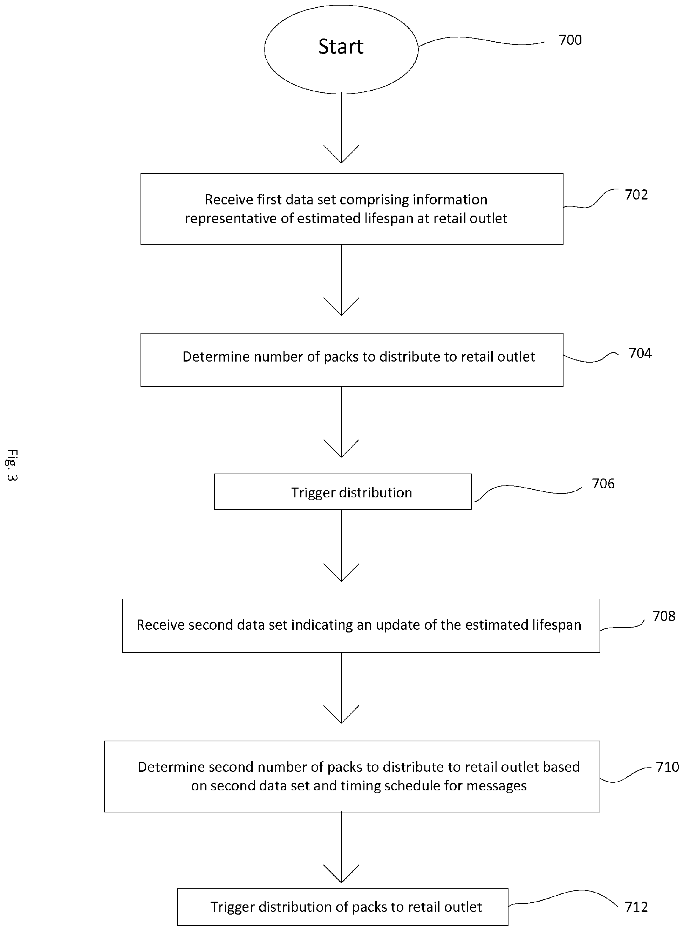

An example method of operating the system of Fig. 2 will now be described with reference to Fig. 3. In operation, the controller 100 in the warehouse 500 receives 702 a first data set comprising information representative of an estimated lifespan of a pack 150 of message-bearing articles 160 at each retail outlet 125, wherein the lifespan relates to a first selected time period.

In response to the receipt of this first data set, the controller 100 then determines 704 a first number of packs 150 of message-bearing articles 160 to distribute to each retail outlet 125 based on the first data set, and triggers 706 the distribution of the first number of packs 150 to the selected retail outlets 125. The number of packs 150 distributed to each retail outlet 125 may therefore differ based on the first data set.

During the course of the message-bearing articles 125 being supplied to consumers at the retail outlet or outlets 125, the controller 100 receives 708 a second data set indicating an update of the estimated lifespan of the first number of packs 150 at each retail outlet 125. In the example shown in Fig. 2 and 3, receiving the second data set comprises receiving consumption data indicating when selected packs 150 of the first number of packs 150 of message-bearing articles 160 are used at the selected retail outlet or outlets 125. This is obtained by the readers 127 in each retail outlet 125 sending consumption data to the controller 100 in the warehouse 500 after reading the machine-readable identifier 155 carried on each pack 150. The data may be sent immediately upon reading the machine-readable identifier 155, or may be sent at a later time. For example, the reader 127 at each retail location may send a periodic update to the controller 100 indicating how many packs 150 (if any) have been read over the first selected time period.

In response to this receipt of the second data set, the controller 100 then determines 710 a second number of packs 150 of message-bearing articles 160 to distribute to each retail outlet 125 over a second selected time period based on the second data set and the timing schedule (for example the time left until the time period for the second message ends), and triggers 712 the distribution of the second number of packs 150 to each retail outlet 125.

Of course the controller 100 may make a determination to send the same number of packs 150 to both retail outlets 125, but may also determine to send different numbers of packs 150 to each retail outlet 125 based on the estimate lifespan of the packs 150 at each retail outlet 125.

In some examples, the controller 100 determines the time difference between the point of consumption (for example, the time of opening if the identifier 155 on the packs 150 is read by the reader 127 when a pack is opened) of respective packs 150 of the first number of packs 150 of message-bearing articles 160 at the retail outlets 125 to determine the lifespan of the packs 150.

In some examples, determining at least one of the first number of packs 150 of message-bearing articles 160 and the second number of packs 150 of message-bearing articles 160 to distribute comprises determining the number of message-bearing articles 160 to distribute to the selected retail outlet 125 from among a total allocation of message-bearing articles 160 for that message, and determining the number of packs 150 that will provide at least the determined number of message-bearing articles 160. For example, if 76 messages are estimated to be needed over a selected time period, and each pack 150 contains 25 message-bearing articles 160, then it will be determined that four packs 150 should be distributed.

In some examples, the controller 100 may determine whether a delivery of a number of packs 150 (if any) of message-bearing articles 160 to a selected retail outlet 125 is required based on the data indicating the estimated lifespan of the number of packs 150 of message-bearing articles 160 for the selected retail outlet 125.

In some examples, triggering the distribution of a number of packs 150 of message-bearing articles 160 comprises distributing the packs 150 of message-bearing articles 160 to the retail outlets 125.

In some examples, determining the second number of packs 150 comprises determining the number of message-bearing articles 160 to distribute so that, based on the estimated lifespan of the first number of packs 150 of the series of messages at the selected retail outlet 125 and the timing schedule, no message-bearing articles 160 remain at the selected retail outlet 125 at the end of the duration of the timing schedule.

In some examples, determining the second number of packs 150 comprises determining the number of packs 150 to distribute to the selected retail outlet 125 at intervals over the second selected time period, wherein each interval is less than the second selected time period, and wherein the intervals are selected so that the number of message-bearing articles 160 at the selected retail outlet 125 remains between a third threshold number of message-bearing articles 160 but below a fourth threshold number of message-bearing articles 160.

In some examples, the second data set is obtained over at least a portion of the timing schedule. In some examples, the first data set is obtained from a previous distribution of packs 150 at the retail outlets 125, and optionally the previous distribution of packs 150 at the retail outlet 125 is of packs 150 comprising message-bearing articles 160 bearing the same (such as the first) message. In some examples, the second data set is based on a combination of the first data set obtained over the first selected time period combined with data obtained over the course of at least a portion of the remaining period of the timing schedule. In this way an improved "real-time" estimate of the lifespan of packs 150 of message-bearing articles 160 at a retail outlet can be estimated.

In some examples, the controller 100 optionally receives a third data set comprising information representative of an estimated lifespan of a first pack 150 of message-bearing articles 160 at other selected retail outlets 125 from among the plurality of retail outlets 125, wherein the lifespan relates to the first selected time period. In response, the controller 100 may determine a first number of packs 150 to distribute to each of the other selected retail outlets 125 based on the third data set (for example, so that the same number of packs 150 containing the same number of message-bearing articles 160 are delivered to all of the retail outlets 125). The controller 100 may then receive a fourth data set indicating an update of the estimated lifespan of the first number of packs 150 at each of the other selected retail outlets 125, and create a master data set representative of the estimated lifespan of the first number of packs 150 at each of the plurality of retail outlets 1250 based on the first, second, third and fourth data sets. In response, the controller 100 may determine a total number of packs 150 to distribute to the plurality of retail outlets 125 over the second selected time period based on the master data set and the timing schedule, trigger the distribution of the packs 150 to the plurality of retail outlets 160.

Determining the total number of packs 150 to distribute may comprise determining a total number of packs 150 to distribute to all retail outlets 125 comprising message-bearing articles 160 bearing the first message. In some examples, determining the total number of packs 150 of message-bearing articles 160 to distribute is also based on the total number of message-bearing articles 160 remaining at the beginning of the second selected time period (for example, using the "used total" and "leftover total" calculations described in the example algorithm below). For example, the total number of message-bearing articles 160 remaining at the beginning of the second selected time period may be determined based on the total number of message-bearing articles 160 at the beginning of the first selected time period and the determined first number of packs of message-bearing articles 160 to distribute to the selected retail outlet 125 and each of the other selected retail outlets 125.

In some examples, the controller 100 also determines the total number of message-bearing articles 160 to print for all of the plurality of retail outlets 125 for the second selected time period based on the master data set.

In some examples, the timing schedule and the distribution of packs 150 to retail outlets 125 may be configured so as to guarantee a certain percentage of customers at a retail location will be supplied with a message-bearing article bearing the desired message. For example, the timing schedule and distribution of packs 150 may be configured to guarantee at least 90%, for example at least 95%, for example at least 99% of customers at a retail outlet 125 are supplied with a message-bearing article 160, for example if they make a purchase at that retail outlet 125.

In some examples, the timing schedule and distribution of packs 150 to retail outlets 25 may be selected so that, based on previous estimates of the lifespan of packs 150 of the message-bearing articles 160 at retail outlets 125, an advertiser may predict that a selected number of message-bearing articles 160 will be distributed over a selected time period across a selected geographic area (for example via a selected number of retail outlets 125).

In some examples, the timing schedule and the distribution of packs 150 to retail outlets 125 may be configured so that a selected number of message-bearing articles 160 are distributed to a number of selected retail outlets 125 over a selected time period (for example, 1000 message bearing articles 160 are to be distributed to all retail outlets at intervals over the course of a five week advertising campaign).

The technical problem of distributing message-bearing articles 160 to the retail outlets 125 such that there are enough message-bearing articles 160 so that message-bearing articles 160 bearing the first message are supplied over the during of the first selected time period, but not too many message-bearing articles 160 are supplied so that there is excessive wastage and/or so that message-bearing articles 160 bearing the wrong message are supplied to customers, has been briefly touched on above. Embodiments of the present disclosure aim to address this technical problem to ensure that there is not excessive wastage of message-bearing articles 160, thus having a clear environmental benefit particularly in the case where the message-bearing articles 160 are paper bags. An improved estimate of the lifespan of the packs 150 of message-bearing articles 160 may also reduce the number of deliveries of packs 150 of message-bearing articles 160 required, thus also having a clear environmental benefit.

In addition, managing the distribution of the message-bearing articles 160 to the retail outlets 125 has important implications for the distributor of the message-bearing articles 160. If not enough message-bearing articles 160 are supplied to the retail outlets 125, the distributor will get a reputation as an unreliable supplier. Alternatively, if the distributor supplies too many message-bearing articles 160 this will result in frequent wastage as message-bearing articles 160 carrying an old message can no longer be used.

By using embodiments of the present disclosure, a distributor of the message-bearing articles 160 may be able to more accurately predict real-time usage of the message-bearing articles 160 and therefore improve the distribution of the message-bearing articles 160 to the retail outlets 125. They may also be able to account for seasonal or unexpected fluctuations in demand.

An example algorithm for use (for example, by the controller 100 in the system of Fig. 2) in determining the number of packs 150 of message-bearing articles 160 to distribute to retail outlets will now be explained by way of example. In this example, the message-bearing articles 160 are paper bags each carrying a printed advertisement.

Key for algorithm:

- $\forall$ = $f$ or all
- $\lfloor \rfloor$ = floor function (i.e. rounds down to nearest whole integer)
- $\lceil \rceil$ = ceiling function (i.e. rounds up to nearest whole integer)
  - Note than $\left\lfloor \dfrac{x}{w} \right\rfloor \times w$ for some whole number w is equivalent to rounding down to the nearest multiple of w,

  e.g. $\left\lfloor \dfrac{87}{10} \right\rfloor \times 10 = 80$, $\left\lfloor \dfrac{377.925}{75} \right\rfloor \times 75 = 325$ etc

- min($x, y, z$) = the smallest number out of x, y and z
- max($x, y, z$) = the largest number out of x, y and z

ALGORITHM ASSUMPTIONS:

- An order has been placed for n retail outlets over T periods. Therefore T $\times$ n timeslots have been purchased by an advertiser.
- The Advertiser wants the campaign (for example, as defined by the timing schedule) to end at the end of this period, so our aim is to safely maximise the number of bags going out over this period without any bags being wasted due to not being distributed.
- Bag usage can be expressed in terms of mathematical probability as a Poisson distribution.

BACKGROUND: CALCULATING THE INITIAL BAG AMOUNT FOR PRINT:

**Let** [$s_1 ... s_n$] be the retail outlets from 1 to n, where [$\mu_1 ... \mu_n$] are the mean average bag usages per period for each retail outlet (gathered for example via bag scanning via reader 127 at each retail outlet 125 and obtained through retailer portal).

**Let** $\beta$ be a confidence level we choose arbitrarily for the timing schedule i.e. loosely speaking, if $\beta$ were to equal 99%, this roughly correlates to being at least 99% confident of outcomes relating to distribution of bags (assuming mean average estimates are accurate).

**Let** m be the standard size pack 150 of bags delivered to retail outlets 125 (e.g. if m = 25 this means distributor can deliver bags in packs 150 of 25, and cannot divide these up into smaller amounts).

Let $\mathbb{P}$ be a poisson probability measure with mean $T \times \sum_{i=1}^{n} \mu_i$ and let X be a random variable representing total bag usage across all retail outlets 125 per period. We find H where

$$\mathbb{P}\{X \le H\} \le 1 - \beta \text{ and } \mathbb{P}\{X \le H - 1\} > 1 - \beta$$

In other words, H is the bag amount representing the crossover point at the low end of the confidence interval for expected bag usage across all n retail outlets and T periods. E.g. if $\beta = 99\%$ and all $[\mu_1 \ldots \mu_n]$ are accurate, can claim that 99% of the time more than H bags will be used. Use the floor function to round down to the nearest m like so:

$$\left\lfloor H/m \right\rfloor \times m$$

Due to accuracy limitations with variance capture relating to the pack size m, and also to add in an extra safety buffer, create an error amount to subtract from this by taking the number of retail outlets n, multiplying this with the pack size m, and arbitrarily multiplying again by min(T, 3) to get print quantity (3 is used as an example multiplier here due to 3 periods being a safe amount of time to remove the possibility of errors from lack of variance capture):

$$\left\lfloor H/m \right\rfloor \times m - \min(T, 3) \times n \times m$$

Accordingly, in some examples determining the number of packs of message-bearing articles to distribute to a selected retail outlet may comprise using a Poisson distribution to model the consumption of message-bearing articles at selected retail outlets to provide an update of the estimate of the lifespan of the packs at the selected retail outlets.

PRECURSOR DEFINITIONS:

**Define** $W_t$ as the "Warehouse Balance" of bags at the start of period t for each $t \in (1, \cdots, T)$. i.e. printed bags ready to deliver, but not yet in retail outlets 125. Then $W_1$ is equal to the bag amount for print just calculated, i.e.

$$W_1 = \left\lfloor H/m \right\rfloor \times m - \min(T, 3) \times n \times m$$

i.e. $[W_1 \ldots W_T]$ is the dynamic sequence of bags still to deliver before each period.

**Define** $P_t$ as the "Preservation Balance" of bags, at the start of period t, for each $t \in (1, \cdots, T)$, meaning the minimum required bags left in the warehouse 500 for future periods of the timing schedule for each period, where $P_T = 0$.. Set these arbitrarily, so know $P_t$ for every $t \in (1, \cdots, T)$ right from the start (this may be used to ensure the distribution of bags is evenly spread throughout the timing schedule in the event of an overly high variance of bag usage).

**Define** At as the "Available Balance" for distribution to retail outlets at start of period t, $\forall \, t \in (1, \cdots, T)$, i.e.

$$A_t = W_t - P_t$$

**Define** $[(d_1(i) \ldots d_T(i)]$ as the amounts delivered to each store $s_i$ in period t, for each $t \in (1, \cdots, T)$ (e.g. $d_3(i)$ is the amount of bags delivered to store $s_i$ in the 3rd period).

**Define** $D_t$ as the "Delivery Total" amount of bags going to all retail outlets 125 in period t, i.e. $D_t = \sum_{i=1}^{n} d_t(i).$ Note that:

$$W_{t+1} = W_t - D_t$$

**Define** $[(b_1(i) \ldots b_T(i)]$ as the bag balances at store $s_i$ after bags are delivered but before any are used. Define $B_t$ as the "Bag Balance Total", representing the amount of bags held at retail outlets after delivery but before use in period t, i.e. $B_t = \sum_{i=1}^{n} b_t(i).$

**Define** $[(u_1(i) \ldots u_T(i)]$ as a set of random variables representing how many bags are used at a selected retail outlet 125 $s_i$ for each period t. This assumed each pack is read or scanned by reader 127 every $m$ bags, but a specific bag number will be derived using data-backed estimates of the average amount of time between scans for the selected retail outlet 125. Note also that this random variable is capped at the number of bags the retail outlet 125 currently holds, i.e. $b_t(i) \geq u_t(i) \; \forall \; t \in \{1, \ldots, T\}$.

$$U_t = \sum_{i=1}^{n} u_t(i).$$

**Define** $U_t$ as the "Used Total", representing total amount of bags used in period t, i.e.

Note that $u_0(i) = 0 \; \forall \; i \in \{1, \ldots, n\}$

**Define** $[(z_1(i) \ldots z_T(i)]$ as the leftover balances at a selected retail outlet 125 $s_i$ for each period t. Therefore:

$$b_t(i) = u_t(i) + z_t(i)$$

$$b_{t+1}(i) = d_{t+1}(i) + z_t(i)$$

**Define** $Z_t$ as the "Leftover Total", representing the total amount of bags still to be used by retail outlets 125 at end of period t, i.e. $Z_t = \sum_{i=1}^{n} z_t(i).$

Note that $z_0(i) = 0 \; \forall \; i \in \{1, \ldots, n\}$

**Let** $\mathbb{P}$ be a poisson probability measure with mean $\mu_i$ and let X(i) be a random variable representing bag usage at a selected retail outlet 125 $s_i$ in one single period (this assumes independence from advertising campaign, i.e. no limit to bag usage on either side). Then define $\theta_i$ such that:

$$\mathbb{P}\{\mathbf{X(i)} \geq \boldsymbol{\theta_i}\} \leq \mathbf{1} - \boldsymbol{\beta} \text{ and } \mathbb{P}\{\mathbf{X(i)} \geq \boldsymbol{\theta_i} + \mathbf{1}\} > \mathbf{1} - \boldsymbol{\beta}$$

In other words, $\theta_i$ is the bag amount representing the crossover point at the high end of the confidence interval for expected bag usage at a selected retail outlet 125 $s_i$ in any single selected time period. The point of this function is it represents a retail outlet's safe bag supply needs such as to ensure it never runs out of bags.

**Define** $\gamma_t(i)$ as the "Store Needs Amount" for a selected retail outlet $s_i$ in a selected time period t whereby:

$$\gamma_t(i) = \max \left\{ \left\lceil \frac{\theta_i - z_{t-1}(i)}{m} \right\rceil \times m, 0 \right\}$$

**Let** $\mathbb{P}_\tau$ be a poisson probability measure with mean $\tau \times \mu_i$ and let $X_\tau(i)$ be a random variable representing bag usage at a selected retail outlet 125 $s_i$ over $\tau$ periods.

**Define** $\pi_\tau(i)$ such that:

$$\mathbb{P}_\tau\{\mathbf{X_\tau(i)} \geq \boldsymbol{\pi_\tau(i)}\} \leq \mathbf{1} - \boldsymbol{\beta} \text{ and } \mathbb{P}_\tau\{\mathbf{X_\tau(i)} \geq \boldsymbol{\pi_\tau(i)} - \mathbf{1}\} > \mathbf{1} - \boldsymbol{\beta}$$

In other words, $\pi_\tau(i)$ is the bag amount representing the crossover point at the low end of the confidence interval for expected bag usage at a selected retail outlet 125 $s_i$ over t periods, e.g. $\pi_4(i)$ is the "safe" amount of bags that can be assumed will be used across four periods, using $\beta$ confidence level. The point of this function may be that towards the end of a timing schedule period for one message in the series of messages, it may not be possible to guarantee all bags will get distributed in some retail outlets 125 (particularly the smaller ones). To address this problem, use these safe bag usage estimates to gauge when to send the final delivery to these selected retail outlets 125 (for example, send the last pack 150 in the penultimate week of the timing schedule).

Accordingly, in some examples, determining a number of packs of message-bearing articles to distribute may comprise setting a confidence interval using a Poisson distribution and determining the number of packs of message-bearing articles to distribute to a selected retail outlet based on the confidence interval, the timing schedule and data received indicating an update of an estimated lifespan of the packs at that selected retail outlet.

Define $\zeta_t(i)$ as the "Minimum needs" for a selected retail outlet 125 $s_i$ in selected time period t whereby:

$$\zeta_t(i) = \max\left\{ \left\lceil \frac{\left|\pi_1(i) - z_{t-1}(i)\right|}{m} \right\rceil \times m, 0 \right\}$$

Define $\Psi_t(i)$ as the "Safety Max" for a selected retail outlet 125 $s_i$ in selected time period t whereby:

$$\Psi_t(i) = \max\left\{ \left\lceil \frac{\left|\pi_{T-t}(i) - z_{t-1}(i)\right|}{m} \right\rceil \times m, 0 \right\}$$

Define $c_t(i)$ as the "Conservative Allocation" and define $e_t(i)$ as the "Extra Allocation" for a selected retail outlet 125 $s_i$ in selected time period t whereby:

$$d_t(i) = c_t(i) + e_t(i)$$

Accordingly, in some examples, determining a number of packs of message-bearing articles to distribute may comprise determining a maximum and minimum number of packs of message-bearing articles to distribute, for example based on upper and lower confidence intervals defined by a mathematical model of the estimated lifespan of those packs, such as a Poisson distribution.

At the beginning of the first time period of the timing schedule we have $A_1 = W_1 - P_1$ bags to allocate (know $W_1$ as the amount of bags printed, and set arbitrary safeguards for all $[P_1 \dots P_T]$ already, so all are already known). There are *n* retail outlets 125 $[s_1 \dots s_n]$ to allocate these to. $u_0(i)$ (amounts used in last period) and $z_0(i)$ (amount left over in last period) are both set to 0 for all of these retail outlets 125 to start. Given that know $[\mu_1 \dots \mu_n]$ a priori, will already have calculated:

$$\begin{pmatrix} \theta_1 \\ \theta_2 \\ \vdots \\ \theta_n \end{pmatrix} \text{ and } \begin{pmatrix} \pi_1(1) & \cdots & \pi_T(1) \\ \vdots & \ddots & \vdots \\ \pi_1(n) & \cdots & \pi_T(n) \end{pmatrix}$$

Therefore, can calculate $\zeta_t(i)$:

$$\begin{pmatrix} \zeta_1(1) \\ \zeta_1(2) \\ \vdots \\ \zeta_1(n) \end{pmatrix}, \begin{pmatrix} \gamma_1(1) \\ \gamma_1(2) \\ \vdots \\ \gamma_1(n) \end{pmatrix} \text{ and } \begin{pmatrix} \Psi_1(1) \\ \Psi_1(2) \\ \vdots \\ \Psi_1(n) \end{pmatrix}$$

Example pseudo-code for the algorithm that may be used by the controller 100 throughout the timing schedule using the above definitions may therefore be:

Let A := $A_1$

For t from 1 to T

For i from 1 to n

$c_t(i) := \max\{\min\{A, \zeta_t(i), \Psi_t(i)\}, 0\}$

$\quad A := A - c_t(i)$

If $i = n$ then end loop

Else if A = 0 then end loop

Else next i

End


For i from 1 to n

$e_t(i) := \max\{\min\{A, \gamma_t(i) - c_t(i), \Psi_t(i) - c_t(i)\}, 0\}$

$\quad A := A - e_t(i)$

If $i = n$ then end loop

Else if A = 0 then end loop

Else next i

End


Set $d_t(i) := c_t(i) + e_t(i) \ \forall i \in \{1, ..., n\}$

$\quad$ Set $D_t := \sum_{i=1}^{n} d_t(i)$

$\quad$ Set $b_t(i) := d_t(i) + z_{t-1}(i) \ \forall i \in \{1, ..., n\}$

$\quad$ Set $B_t = \sum_{i=1}^{n} b_t(i)$

$\quad\quad$ Set $W_{t+1} := W_t - D_t$

# A selected time period passes, with collected bag usage data for each retail outlet, so we now know [($u_t(1)$ ... $u_t(n)$)]

Set $z_t(i) := b_t(i) - u_t(i) \ \forall i \in \{1, ..., n\}$
Next t.

Some example estimates of bag usage using the above algorithm at a selection of retail outlets 125 is provided in Tables 1 to 9 below.

Table 1 - Trial Summary

|  | Mean total (1 Period) | Mean total (All Periods) | H | floor (H/m) x m | min(T,3) x n x m | $W_1$ |  |  |
|---|---|---|---|---|---|---|---|---|
| **ALL** | 9,599 | 47,995 | 47,485 | 47,475 | 1,875 | 45,600 |  |  |
|  |  |  |  |  |  |  |  |  |

(continued)

| Retail Outlets | Mean total (1 Period) $\mu_i$ | Mean total (All Periods) $T \times \mu_i$ | H $\theta_i$ | floor (H/m) x m $\pi_1(i)$ | min(T,3) x n x m $\pi_2(i)$ | $W_1$ $\pi_3(i)$ | $\pi_4(i)$ | $\pi_5(i)$ |
|---|---|---|---|---|---|---|---|---|
| $s_1$ | 30 | 150 | 42 | 17 | 42 | 68 | 94 | 121 |
| $s_2$ | 266 | 1,328 | 303 | 227 | 477 | 731 | 986 | 1,242 |
| $s_3$ | 305 | 1,523 | 345 | 264 | 551 | 843 | 1,137 | 1,431 |
| $s_4$ | 940 | 4,702 | 1,011 | 869 | 1,780 | 2,697 | 3,618 | 4,542 |
| $s_5$ | 248 | 1,238 | 284 | 211 | 443 | 679 | 917 | 1,155 |
| $s_6$ | 262 | 1,309 | 299 | 224 | 470 | 720 | 972 | 1,225 |
| $s_7$ | 616 | 3,080 | 673 | 558 | 1,150 | 1,748 | 2,348 | 2,951 |
| $s_8$ | 140 | 698 | 167 | 112 | 240 | 371 | 503 | 636 |
| $s_9$ | 269 | 1,347 | 307 | 231 | 485 | 742 | 1,001 | 1,261 |
| $s_{10}$ | 728 | 3,640 | 790 | 665 | 1,367 | 2,075 | 2,786 | 3,499 |
| $s_{11}$ | 302 | 1,512 | 343 | 262 | 547 | 837 | 1,128 | 1,421 |
| $s_{12}$ | 47 | 233 | 62 | 30 | 70 | 112 | 154 | 197 |
| $s_{13}$ | 420 | 2,100 | 467 | 372 | 772 | 1,177 | 1,584 | 1,993 |
| $s_{14}$ | 144 | 718 | 171 | 115 | 247 | 382 | 518 | 655 |
| $s_{15}$ | 163 | 816 | 193 | 133 | 284 | 438 | 593 | 749 |
| $s_{16}$ | 852 | 4,258 | 919 | 784 | 1,607 | 2,437 | 3,271 | 4,106 |
| $s_{17}$ | 982 | 4,909 | 1,054 | 909 | 1,860 | 2,819 | 3,781 | 4,746 |
| $s_{18}$ | 617 | 3,084 | 674 | 559 | 1,152 | 1,750 | 2,351 | 2,954 |
| $s_{19}$ | 268 | 1,341 | 306 | 230 | 482 | 738 | 996 | 1,256 |
| $s_{20}$ | 747 | 3,735 | 810 | 683 | 1,404 | 2,131 | 2,861 | 3,593 |
| $s_{21}$ | 314 | 1,572 | 355 | 273 | 570 | 871 | 1,175 | 1,479 |
| $s_{22}$ | 552 | 2,760 | 606 | 497 | 1,026 | 1,561 | 2,098 | 2,638 |
| $s_{23}$ | 154 | 770 | 183 | 125 | 267 | 412 | 558 | 705 |
| $s_{24}$ | 125 | 625 | 151 | 99 | 213 | 330 | 448 | 567 |
| $s_{25}$ | 110 | 550 | 134 | 85 | 185 | 287 | 391 | 495 |

Table 2 - Trial Summary

| | | | TRIAL SUMMARY | |
|---|---|---|---|---|
| **Retail Outlet Count** | 25 | | | |
| | | | Bags Delivered | 45,600 |
| **m** | 25 | | Bags Used | 45,600 |
| | | | Bags Needed (Retail Outlets) | 47,763 |
| **Time Periods** | 5 | | Capture | 95.47% |
| | | | | |

(continued)

| Retail Outlet Count | 25 | | TRIAL SUMMARY | | | |
|---|---|---|---|---|---|---|
| $P_1$ | 31,920 | | | | | |
| $P_2$ | 22,800 | | | | | |
| $P_3$ | 13,680 | | | | | |
| $P_4$ | 4,560 | | Undersupply | | | 2,163 |
| $P_5$ | 0 | | Oversupply | | | 0 |

Table 3 - PREP (t=0)

| $u_0(i)$ | $z_0(i)$ |
|---|---|
| 0 | 0 |

Table 4 - Week 1 (t=1)

| W$_1$ | 45,600 | | P$_1$ | 31,920 | | A$_1$ | 13,680 | | D$_1$ | 10,950 | | | | | | | |
| --- | --- | --- | --- | --- | --- | --- | --- | --- | --- | --- | --- | --- | --- | --- | --- | --- | --- |
| | | | | | | | | | | | | | | | | | |
| Retail Outlets | $\zeta_1(i)$ | $\gamma_1(i)$ | $\psi_1/(i)$ | | A | $c_1(i)$ | | A | $e_1(i)$ | | $d_1(i)$ | $b_1(i)$ | | $u_1(i)$ | $z_1(i)$ | Bags Needed | Undersupply |
| $s_1$ | 0 | 50 | 100 | | 13,680 | 0 | | 5,455 | 50 | | 50 | 50 | | 23 | 27 | 23 | 0 |
| $s_2$ | 225 | 325 | 1,225 | | 13,680 | 225 | | 5,405 | 100 | | 325 | 325 | | 265 | 60 | 265 | 0 |
| $s_3$ | 250 | 350 | 1,425 | | 13,455 | 250 | | 5,305 | 100 | | 350 | 350 | | 310 | 40 | 310 | 0 |
| $s_4$ | 850 | 1,025 | 4,525 | | 13,205 | 850 | | 5,205 | 175 | | 1,025 | 1,025 | | 949 | 76 | 949 | 0 |
| $s_5$ | 200 | 300 | 1,150 | | 12,355 | 200 | | 5,030 | 100 | | 300 | 300 | | 257 | 43 | 257 | 0 |
| $s_6$ | 200 | 300 | 1,225 | | 12,155 | 200 | | 4,930 | 100 | | 300 | 300 | | 290 | 10 | 290 | 0 |
| $s_7$ | 550 | 675 | 2,950 | | 11,955 | 550 | | 4,830 | 125 | | 675 | 675 | | 632 | 43 | 632 | 0 |
| $s_8$ | 100 | 175 | 625 | | 11,405 | 100 | | 4,705 | 75 | | 175 | 175 | | 133 | 42 | 133 | 0 |
| $s_9$ | 225 | 325 | 1,250 | | 11,305 | 225 | | 4,630 | 100 | | 325 | 325 | | 259 | 66 | 259 | 0 |
| $s_{10}$ | 650 | 800 | 3,475 | | 11,080 | 650 | | 4,530 | 150 | | 800 | 800 | | 745 | 55 | 745 | 0 |
| $s_{11}$ | 250 | 350 | 1,400 | | 10,430 | 250 | | 4,380 | 100 | | 350 | 350 | | 325 | 25 | 325 | 0 |
| $s_{12}$ | 25 | 75 | 175 | | 10,180 | 25 | | 4,280 | 50 | | 75 | 75 | | 37 | 38 | 37 | 0 |
| $s_{13}$ | 350 | 475 | 1,975 | | 10,155 | 350 | | 4,230 | 125 | | 475 | 475 | | 390 | 85 | 390 | 0 |
| $s_{14}$ | 100 | 175 | 650 | | 9,805 | 100 | | 4,105 | 75 | | 175 | 175 | | 120 | 55 | 120 | 0 |
| $s_{15}$ | 125 | 200 | 725 | | 9,705 | 125 | | 4,030 | 75 | | 200 | 200 | | 150 | 50 | 150 | 0 |
| $s_{16}$ | 775 | 925 | 4,100 | | 9,580 | 775 | | 3,955 | 150 | | 925 | 925 | | 841 | 84 | 841 | 0 |
| $s_{17}$ | 900 | 1,075 | 4,725 | | 8,805 | 900 | | 3,805 | 175 | | 1,075 | 1,075 | | 990 | 85 | 990 | 0 |
| $s_{18}$ | 550 | 675 | 2,950 | | 7,905 | 550 | | 3,630 | 125 | | 675 | 675 | | 589 | 86 | 589 | 0 |
| $s_{19}$ | 225 | 325 | 1,250 | | 7,355 | 225 | | 3,505 | 100 | | 325 | 325 | | 251 | 74 | 251 | 0 |
| $s_{20}$ | 675 | 825 | 3,575 | | 7,130 | 675 | | 3,405 | 150 | | 825 | 825 | | 709 | 116 | 709 | 0 |
| $s_{21}$ | 250 | 375 | 1,475 | | 6,455 | 250 | | 3,255 | 125 | | 375 | 375 | | 299 | 76 | 299 | 0 |
| $s_{22}$ | 475 | 625 | 2,625 | | 6,205 | 475 | | 3,130 | 150 | | 625 | 625 | | 557 | 68 | 557 | 0 |
| $s_{23}$ | 125 | 200 | 700 | | 5,730 | 125 | | 2,980 | 75 | | 200 | 200 | | 141 | 59 | 141 | 0 |

| W$_1$ | 45,600 | | P$_1$ | 31,920 | | A$_1$ | 13,680 | | D$_1$ | 10,950 | | | | | | | | |
| | | | | | | | | | | | | | | | | | | |
| Retail Outlets | $\zeta_1(i)$ | $\gamma_1(i)$ | $\psi_1/(i)$ | | A | $c_1(i)$ | | A | $e_1(i)$ | | $d_1(i)$ | $b_1(i)$ | | $u_1(i)$ | $z_1(i)$ | | Bags Needed | Undersupply |
|---|---|---|---|---|---|---|---|---|---|---|---|---|---|---|---|---|---|---|
| s$_{24}$ | 75 | 175 | 550 | | 5,605 | 75 | | 2,905 | 100 | | 175 | 175 | | 113 | 62 | | 113 | 0 |
| s$_{25}$ | 75 | 150 | 475 | | 5,530 | 75 | | 2,805 | 75 | | 150 | 150 | | 105 | 45 | | 105 | 0 |

Table 5 - Week 2 (t=2)

| $W_2$ | 34,650 | | $P_2$ | 22,800 | | $A_2$ | 11,850 | | $D_2$ | 9,450 | | | | | | |
|---|---|---|---|---|---|---|---|---|---|---|---|---|---|---|---|---|
| Retail Outlets | $\zeta_2(i)$ | $\gamma_2(i)$ | $\psi_2(i)$ | A | $c_2(i)$ | | A | $e_2(i)$ | | $d_2(i)$ | $b_2(i)$ | | $u_2(i)$ | $z_2(i)$ | Bags Needed | Undersupply |
| $s_1$ | 0 | 25 | 50 | 11,850 | 0 | | 5,100 | 25 | | 25 | 52 | | 20 | 32 | 20 | 0 |
| $s_2$ | 150 | 250 | 900 | 11,850 | 150 | | 5,075 | 100 | | 250 | 310 | | 261 | 49 | 261 | 0 |
| $s_3$ | 200 | 325 | 1,075 | 11,700 | 200 | | 4,975 | 125 | | 325 | 365 | | 287 | 78 | 287 | 0 |
| $s_4$ | 775 | 950 | 3,600 | 11,500 | 775 | | 4,850 | 175 | | 950 | 1,026 | | 912 | 114 | 912 | 0 |
| $s_5$ | 150 | 250 | 850 | 10,725 | 150 | | 4,675 | 100 | | 250 | 293 | | 236 | 57 | 236 | 0 |
| $s_6$ | 200 | 300 | 925 | 10,575 | 200 | | 4,575 | 100 | | 300 | 310 | | 233 | 77 | 233 | 0 |
| $s_7$ | 500 | 650 | 2,275 | 10,375 | 500 | | 4,475 | 150 | | 650 | 693 | | 624 | 69 | 624 | 0 |
| $s_8$ | 50 | 125 | 425 | 9,875 | 50 | | 4,325 | 75 | | 125 | 167 | | 153 | 14 | 153 | 0 |
| $s_9$ | 150 | 250 | 975 | 9,825 | 150 | | 4,250 | 100 | | 250 | 316 | | 262 | 54 | 262 | 0 |
| $s_{10}$ | 600 | 750 | 2,725 | 9,675 | 600 | | 4,150 | 150 | | 750 | 805 | | 735 | 70 | 735 | 0 |
| $s_{11}$ | 225 | 325 | 1,025 | 9,075 | 225 | | 4,000 | 100 | | 325 | 350 | | 296 | 54 | 296 | 0 |
| $s_{12}$ | 0 | 25 | 75 | 8,850 | 0 | | 3,900 | 25 | | 25 | 63 | | 51 | 12 | 51 | 0 |
| $s_{13}$ | 275 | 400 | 1,525 | 8,850 | 275 | | 3,875 | 125 | | 400 | 485 | | 434 | 51 | 434 | 0 |
| $s_{14}$ | 50 | 125 | 425 | 8,575 | 50 | | 3,750 | 75 | | 125 | 180 | | 145 | 35 | 145 | 0 |
| $s_{15}$ | 75 | 150 | 500 | 8,525 | 75 | | 3,675 | 75 | | 150 | 200 | | 165 | 35 | 165 | 0 |
| $s_{16}$ | 700 | 850 | 3,175 | 8,450 | 700 | | 3,600 | 150 | | 850 | 934 | | 865 | 69 | 865 | 0 |
| $s_{17}$ | 800 | 975 | 3,700 | 7,750 | 800 | | 3,450 | 175 | | 975 | 1,060 | | 971 | 89 | 971 | 0 |
| $s_{18}$ | 450 | 600 | 2,225 | 6,950 | 450 | | 3,275 | 150 | | 600 | 686 | | 619 | 67 | 619 | 0 |
| $s_{19}$ | 150 | 250 | 900 | 6,500 | 150 | | 3,125 | 100 | | 250 | 324 | | 265 | 59 | 265 | 0 |
| $s_{20}$ | 550 | 700 | 2,775 | 6,350 | 550 | | 3,025 | 150 | | 700 | 816 | | 722 | 94 | 722 | 0 |
| $s_{21}$ | 175 | 300 | 1,100 | 5,800 | 175 | | 2,875 | 125 | | 300 | 376 | | 338 | 38 | 338 | 0 |
| $s_{22}$ | 425 | 550 | 2,025 | 5,625 | 425 | | 2,750 | 125 | | 550 | 618 | | 563 | 55 | 563 | 0 |
| $s_{23}$ | 50 | 125 | 500 | 5,200 | 50 | | 2,625 | 75 | | 125 | 184 | | 162 | 22 | 162 | 0 |

EP 3 447 697 A1

(continued)

| W₂ | 34,650 | | P₂ | 22,800 | | A₂ | 11,850 | | D₂ | 9,450 | | | | | | | | |
|---|---|---|---|---|---|---|---|---|---|---|---|---|---|---|---|---|---|

| Retail Outlets | $\zeta_2(i)$ | $\gamma_2(i)$ | $\psi_2(i)$ | | A | $c_2(i)$ | | A | $e_2(i)$ | | $d_2(i)$ | $b_2(i)$ | | $u_2(i)$ | $z_2(i)$ | | Bags Needed | Undersupply |
|---|---|---|---|---|---|---|---|---|---|---|---|---|---|---|---|---|---|---|
| $s_{24}$ | 25 | 100 | 425 | | 5,150 | 25 | | 2,550 | 75 | | 100 | 162 | | 137 | 25 | | 137 | 0 |
| $s_{25}$ | 25 | 100 | 375 | | 5,125 | 25 | | 2,475 | 75 | | 100 | 145 | | 108 | 37 | | 108 | 0 |

Table 6 - Week 3 (t=3)

| $W_3$ | 25,200 | | $P_3$ | 13,680 | | $A_3$ | 11,520 | | $D_3$ | 9,600 | | | | | | | | |
|---|---|---|---|---|---|---|---|---|---|---|---|---|---|---|---|---|---|---|
| | | | | | | | | | | | | | | | | | | |
| Retail Outlets | $\zeta_3(i)$ | $\gamma_3(i)$ | $\psi_3(i)$ | | A | $c_3(i)$ | | A | $e_3(i)$ | | $d_3(i)$ | $b_3(i)$ | | $u_3(i)$ | $z_3(i)$ | | Bags Needed | Undersupply |
| $s_1$ | 0 | 25 | 25 | | 11,520 | 0 | | 4,670 | 25 | | 25 | 57 | | 28 | 29 | | 28 | 0 |
| $s_2$ | 175 | 275 | 675 | | 11,520 | 175 | | 4,645 | 100 | | 275 | 324 | | 269 | 55 | | 269 | 0 |
| $s_3$ | 175 | 275 | 750 | | 11,345 | 175 | | 4,545 | 100 | | 275 | 353 | | 305 | 48 | | 305 | 0 |
| $s_4$ | 750 | 900 | 2,575 | | 11,170 | 750 | | 4,445 | 150 | | 900 | 1,014 | | 995 | 19 | | 995 | 0 |
| $s_5$ | 150 | 250 | 600 | | 10,420 | 150 | | 4,295 | 100 | | 250 | 307 | | 229 | 78 | | 229 | 0 |
| $s_6$ | 125 | 225 | 625 | | 10,270 | 125 | | 4,195 | 100 | | 225 | 302 | | 274 | 28 | | 274 | 0 |
| $s_7$ | 475 | 625 | 1,675 | | 10,145 | 475 | | 4,095 | 150 | | 625 | 694 | | 632 | 62 | | 632 | 0 |
| $s_8$ | 75 | 175 | 350 | | 9,670 | 75 | | 3,945 | 100 | | 175 | 189 | | 129 | 60 | | 129 | 0 |
| $s_9$ | 175 | 275 | 675 | | 9,595 | 175 | | 3,845 | 100 | | 275 | 329 | | 290 | 39 | | 290 | 0 |
| $s_{10}$ | 575 | 725 | 2,000 | | 9,420 | 575 | | 3,745 | 150 | | 725 | 795 | | 704 | 91 | | 704 | 0 |
| $s_{11}$ | 200 | 300 | 775 | | 8,845 | 200 | | 3,595 | 100 | | 300 | 354 | | 306 | 48 | | 306 | 0 |
| $s_{12}$ | 0 | 50 | 100 | | 8,645 | 0 | | 3,495 | 50 | | 50 | 62 | | 46 | 16 | | 46 | 0 |
| $s_{13}$ | 300 | 425 | 1,125 | | 8,645 | 300 | | 3,445 | 125 | | 425 | 476 | | 431 | 45 | | 431 | 0 |
| $s_{14}$ | 75 | 150 | 325 | | 8,345 | 75 | | 3,320 | 75 | | 150 | 185 | | 137 | 48 | | 137 | 0 |
| $s_{15}$ | 75 | 175 | 400 | | 8,270 | 75 | | 3,245 | 100 | | 175 | 210 | | 176 | 34 | | 176 | 0 |
| $s_{16}$ | 700 | 850 | 2,350 | | 8,195 | 700 | | 3,145 | 150 | | 850 | 919 | | 850 | 69 | | 850 | 0 |
| $s_{17}$ | 800 | 975 | 2,725 | | 7,495 | 800 | | 2,995 | 175 | | 975 | 1,064 | | 1,017 | 47 | | 1017 | 0 |
| $s_{18}$ | 475 | 625 | 1,675 | | 6,695 | 475 | | 2,820 | 150 | | 625 | 692 | | 608 | 84 | | 608 | 0 |
| $s_{19}$ | 150 | 250 | 675 | | 6,220 | 150 | | 2,670 | 100 | | 250 | 309 | | 250 | 59 | | 250 | 0 |
| $s_{20}$ | 575 | 725 | 2,025 | | 6,070 | 575 | | 2,570 | 150 | | 725 | 819 | | 733 | 86 | | 733 | 0 |
| $s_{21}$ | 225 | 325 | 825 | | 5,495 | 225 | | 2,420 | 100 | | 325 | 363 | | 319 | 44 | | 319 | 0 |
| $s_{22}$ | 425 | 575 | 1,500 | | 5,270 | 425 | | 2,320 | 150 | | 575 | 630 | | 572 | 58 | | 572 | 0 |
| $s_{23}$ | 100 | 175 | 375 | | 4,845 | 100 | | 2,170 | 75 | | 175 | 197 | | 151 | 46 | | 151 | 0 |

EP 3 447 697 A1

(continued)

| W$_3$ | 25,200 | | P$_3$ | 13,680 | | A$_3$ | 11,520 | | D$_3$ | 9,600 | | | | | | | |
|---|---|---|---|---|---|---|---|---|---|---|---|---|---|---|---|---|---|
| | | | | | | | | | | | | | | | | | |
| **Retail Outlets** | $\zeta_3(i)$ | $\gamma_3(i)$ | $\psi_3(i)$ | | **A** | $c_3(i)$ | | **A** | $e_3(i)$ | | $d_3(i)$ | $b_3(i)$ | | $u_3(i)$ | $z_3(i)$ | | Bags Needed | Undersupply |
| s$_{24}$ | 50 | 150 | 300 | | 4,745 | 50 | | 2,095 | 100 | | 150 | 175 | | 127 | 48 | | 127 | 0 |
| s$_{25}$ | 25 | 100 | 250 | | 4,695 | 25 | | 1,995 | 75 | | 100 | 137 | | 108 | 29 | | 108 | 0 |

Table 7 - Week 4 (t=4)

| Retail Outlets | $\zeta_4(i)$ | $\gamma_4(i)$ | $\psi_4(i)$ | | A | $c_4(i)$ | | A | $e_4(i)$ | | $d_4(i)$ | $b_4(i)$ | | $u_4(i)$ | $z_4(i)$ | | Bags Needed | Undersupply |
|---|---|---|---|---|---|---|---|---|---|---|---|---|---|---|---|---|---|---|
| $W_4$ | 15,600 | | $P_4$ | 4,560 | | $A_4$ | 11,040 | | $D_4$ | 9,575 | | | | | | | | |
| | | | | | | | | | | | | | | | | | | |
| $s_1$ | 0 | 25 | 0 | | 11,040 | 0 | | 4,065 | 0 | | 0 | 29 | | 19 | 10 | | 19 | 0 |
| $s_2$ | 150 | 250 | 400 | | 11,040 | 150 | | 4,065 | 100 | | 250 | 305 | | 285 | 20 | | 285 | 0 |
| $s_3$ | 200 | 300 | 500 | | 10,890 | 200 | | 3,965 | 100 | | 300 | 348 | | 284 | 64 | | 284 | 0 |
| $s_4$ | 850 | 1,000 | 1,750 | | 10,690 | 850 | | 3,865 | 150 | | 1,000 | 1,019 | | 909 | 110 | | 909 | 0 |
| $s_5$ | 125 | 225 | 350 | | 9,840 | 125 | | 3,715 | 100 | | 225 | 303 | | 230 | 73 | | 230 | 0 |
| $s_6$ | 175 | 275 | 425 | | 9,715 | 175 | | 3,615 | 100 | | 275 | 303 | | 284 | 19 | | 284 | 0 |
| $s_7$ | 475 | 625 | 1,075 | | 9,540 | 475 | | 3,515 | 150 | | 625 | 687 | | 616 | 71 | | 616 | 0 |
| $s_8$ | 50 | 125 | 175 | | 9,065 | 50 | | 3,365 | 75 | | 125 | 185 | | 134 | 51 | | 134 | 0 |
| $s_9$ | 175 | 275 | 425 | | 9,015 | 175 | | 3,290 | 100 | | 275 | 314 | | 259 | 55 | | 259 | 0 |
| $s_{10}$ | 550 | 700 | 1,275 | | 8,840 | 550 | | 3,190 | 150 | | 700 | 791 | | 721 | 70 | | 721 | 0 |
| $s_{11}$ | 200 | 300 | 475 | | 8,290 | 200 | | 3,040 | 100 | | 300 | 348 | | 332 | 16 | | 332 | 0 |
| $s_{12}$ | 0 | 50 | 50 | | 8,090 | 0 | | 2,940 | 50 | | 50 | 66 | | 52 | 14 | | 52 | 0 |
| $s_{13}$ | 325 | 425 | 725 | | 8,090 | 325 | | 2,890 | 100 | | 425 | 470 | | 426 | 44 | | 426 | 0 |
| $s_{14}$ | 50 | 125 | 175 | | 7,765 | 50 | | 2,790 | 75 | | 125 | 173 | | 123 | 50 | | 123 | 0 |
| $s_{15}$ | 75 | 175 | 250 | | 7,715 | 75 | | 2,715 | 100 | | 175 | 209 | | 182 | 27 | | 182 | 0 |
| $s_{16}$ | 700 | 850 | 1,525 | | 7,640 | 700 | | 2,615 | 150 | | 850 | 919 | | 848 | 71 | | 848 | 0 |
| $s_{17}$ | 850 | 1,025 | 1,800 | | 6,940 | 850 | | 2,465 | 175 | | 1,025 | 1,072 | | 944 | 128 | | 944 | 0 |
| $s_{18}$ | 475 | 600 | 1,050 | | 6,090 | 475 | | 2,290 | 125 | | 600 | 684 | | 596 | 88 | | 596 | 0 |
| $s_{19}$ | 150 | 250 | 400 | | 5,615 | 150 | | 2,165 | 100 | | 250 | 309 | | 260 | 49 | | 260 | 0 |
| $s_{20}$ | 575 | 725 | 1,300 | | 5,465 | 575 | | 2,065 | 150 | | 725 | 811 | | 769 | 42 | | 769 | 0 |
| $s_{21}$ | 225 | 325 | 525 | | 4,890 | 225 | | 1,915 | 100 | | 325 | 369 | | 308 | 61 | | 308 | 0 |
| $s_{22}$ | 425 | 550 | 950 | | 4,665 | 425 | | 1,815 | 125 | | 550 | 608 | | 543 | 65 | | 543 | 0 |
| $s_{23}$ | 75 | 150 | 200 | | 4,240 | 75 | | 1,690 | 75 | | 150 | 196 | | 152 | 44 | | 152 | 0 |

(continued)

| Retail Outlets | W₄ 15,600 | | P₄ 4,560 | | A₄ 11,040 | | D₄ 9,575 | | | | | | | |
|---|---|---|---|---|---|---|---|---|---|---|---|---|---|---|
| | $\zeta_4(i)$ | $\gamma_4(i)$ | $\psi_4(i)$ | A | $c_4(i)$ | A | $e_4(i)$ | A | $d_4(i)$ | $b_4(i)$ | $u_4(i)$ | $z_4(i)$ | Bags Needed | Undersupply |
| $s_{24}$ | 50 | 125 | 150 | 4,165 | 50 | 1,615 | 75 | 125 | 173 | 116 | 57 | 116 | 0 | |
| $s_{25}$ | 50 | 125 | 150 | 4,115 | 50 | 1,540 | 75 | 125 | 154 | 106 | 48 | 106 | 0 | |

25

Table 8 - Week 5 (t=5)

| W₅ | 6,025 | | P₅ | 0 | | A₅ | 6,025 | | D₅ | 6,025 | | | | | | |
|---|---|---|---|---|---|---|---|---|---|---|---|---|---|---|---|---|

| Retail Outlets | $\zeta_5(i)$ | $\gamma_5(i)$ | $\psi_5(i)$ | | A | $c_5(i)$ | | A | $e_5(i)$ | | $d_5(i)$ | $b_5(i)$ | | $u_5(i)$ | $z_5(i)$ | | Bags Needed | Undersupply |
|---|---|---|---|---|---|---|---|---|---|---|---|---|---|---|---|---|---|---|
| $s_1$ | 0 | 50 | 0 | | 6,025 | 0 | | 0 | 0 | | 0 | 10 | | 10 | 0 | | 25 | 15 |
| $s_2$ | 200 | 300 | 100 | | 6,025 | 100 | | 0 | 0 | | 100 | 120 | | 120 | 0 | | 244 | 124 |
| $s_3$ | 200 | 300 | 175 | | 5,925 | 175 | | 0 | 0 | | 175 | 239 | | 239 | 0 | | 310 | 71 |
| $s_4$ | 750 | 925 | 850 | | 5,750 | 750 | | 0 | 0 | | 750 | 860 | | 860 | 0 | | 914 | 54 |
| $s_5$ | 125 | 225 | 125 | | 5,000 | 125 | | 0 | 0 | | 125 | 198 | | 198 | 0 | | 240 | 42 |
| $s_6$ | 200 | 300 | 150 | | 4,875 | 150 | | 0 | 0 | | 150 | 169 | | 169 | 0 | | 256 | 87 |
| $s_7$ | 475 | 625 | 500 | | 4,725 | 475 | | 0 | 0 | | 475 | 546 | | 546 | 0 | | 626 | 80 |
| $s_8$ | 50 | 125 | 25 | | 4,250 | 25 | | 0 | 0 | | 25 | 76 | | 76 | 0 | | 123 | 47 |
| $s_9$ | 175 | 275 | 200 | | 4,225 | 175 | | 0 | 0 | | 175 | 230 | | 230 | 0 | | 265 | 35 |
| $s_{10}$ | 575 | 725 | 650 | | 4,050 | 575 | | 0 | 0 | | 575 | 645 | | 645 | 0 | | 737 | 92 |
| $s_{11}$ | 225 | 350 | 200 | | 3,475 | 200 | | 0 | 0 | | 200 | 216 | | 216 | 0 | | 302 | 86 |
| $s_{12}$ | 0 | 50 | 0 | | 3,275 | 0 | | 0 | 0 | | 0 | 14 | | 14 | 0 | | 43 | 29 |
| $s_{13}$ | 325 | 425 | 325 | | 3,275 | 325 | | 0 | 0 | | 325 | 369 | | 369 | 0 | | 415 | 46 |
| $s_{14}$ | 50 | 125 | 25 | | 2,950 | 25 | | 0 | 0 | | 25 | 75 | | 75 | 0 | | 147 | 72 |
| $s_{15}$ | 100 | 175 | 0 | | 2,925 | 0 | | 0 | 0 | | 0 | 27 | | 27 | 0 | | 170 | 143 |
| $s_{16}$ | 700 | 850 | 675 | | 2,925 | 675 | | 0 | 0 | | 675 | 746 | | 746 | 0 | | 881 | 135 |
| $s_{17}$ | 775 | 950 | 850 | | 2,250 | 775 | | 0 | 0 | | 775 | 903 | | 903 | 0 | | 994 | 91 |
| $s_{18}$ | 450 | 600 | 500 | | 1,475 | 450 | | 0 | 0 | | 450 | 538 | | 538 | 0 | | 567 | 29 |
| $s_{19}$ | 175 | 275 | 150 | | 1,025 | 150 | | 0 | 0 | | 150 | 199 | | 199 | 0 | | 267 | 68 |
| $s_{20}$ | 625 | 775 | 600 | | 875 | 600 | | 0 | 0 | | 600 | 642 | | 642 | 0 | | 749 | 107 |
| $s_{21}$ | 200 | 300 | 225 | | 275 | 200 | | 0 | 0 | | 200 | 261 | | 261 | 0 | | 340 | 79 |
| $s_{22}$ | 425 | 550 | 425 | | 75 | 75 | | 0 | 0 | | 75 | 140 | | 140 | 0 | | 537 | 397 |
| $s_{23}$ | 75 | 150 | 75 | | 0 | 0 | | 0 | 0 | | 0 | 44 | | 44 | 0 | | 162 | 118 |

EP 3 447 697 A1

| $W_5$ | 6,025 | | $P_5$ | 0 | | $A_5$ | 6,025 | | $D_5$ | 6,025 | | | | | | | |
|---|---|---|---|---|---|---|---|---|---|---|---|---|---|---|---|---|---|

| Retail Outlets | $\zeta_5(i)$ | $\gamma_5(i)$ | $\psi_5(i)$ | | A | $c_5(i)$ | | A | $e_5(i)$ | | $d_5(i)$ | $b_5(i)$ | | $u_5(i)$ | $z_5(i)$ | | Bags Needed | Undersupply |
|---|---|---|---|---|---|---|---|---|---|---|---|---|---|---|---|---|---|---|
| $s_{24}$ | 25 | 100 | 75 | | 0 | 0 | | 0 | 0 | | 0 | 57 | | 57 | 0 | | 117 | 60 |
| $s_{25}$ | 25 | 100 | 75 | | 0 | 0 | | 0 | 0 | | 0 | 48 | | 48 | 0 | | 104 | 56 |

Table 9 - Bag supply totals for trial period

| Retail Outlets ($s_i$) | Week 1 | Week 2 | Week 3 | Week 4 | Week 5 |
|---|---|---|---|---|---|
| $s_1$ | 23 | 20 | 28 | 19 | 25 |
| $s_2$ | 265 | 261 | 269 | 285 | 244 |
| $s_3$ | 310 | 287 | 305 | 284 | 310 |
| $s_4$ | 949 | 912 | 995 | 909 | 914 |
| $s_5$ | 257 | 236 | 229 | 230 | 240 |
| $s_6$ | 290 | 233 | 274 | 284 | 256 |
| $s_7$ | 632 | 624 | 632 | 616 | 626 |
| $s_8$ | 133 | 153 | 129 | 134 | 123 |
| $s_9$ | 259 | 262 | 290 | 259 | 265 |
| $s_{10}$ | 745 | 735 | 704 | 721 | 737 |
| $s_{11}$ | 325 | 296 | 306 | 332 | 302 |
| $s_{12}$ | 37 | 51 | 46 | 52 | 43 |
| $s_{13}$ | 390 | 434 | 431 | 426 | 415 |
| $s_{14}$ | 120 | 145 | 137 | 123 | 147 |
| $s_{15}$ | 150 | 165 | 176 | 182 | 170 |
| $s_{16}$ | 841 | 865 | 850 | 848 | 881 |
| $s_{17}$ | 990 | 971 | 1017 | 944 | 994 |
| $s_{18}$ | 589 | 619 | 608 | 596 | 567 |
| $s_{19}$ | 251 | 265 | 250 | 260 | 267 |
| $s_{20}$ | 709 | 722 | 733 | 769 | 749 |
| $s_{21}$ | 299 | 338 | 319 | 308 | 340 |
| $s_{22}$ | 557 | 563 | 572 | 543 | 537 |
| $s_{23}$ | 141 | 162 | 151 | 152 | 162 |
| $s_{24}$ | 113 | 137 | 127 | 116 | 117 |
| $s_{25}$ | 105 | 108 | 108 | 106 | 104 |

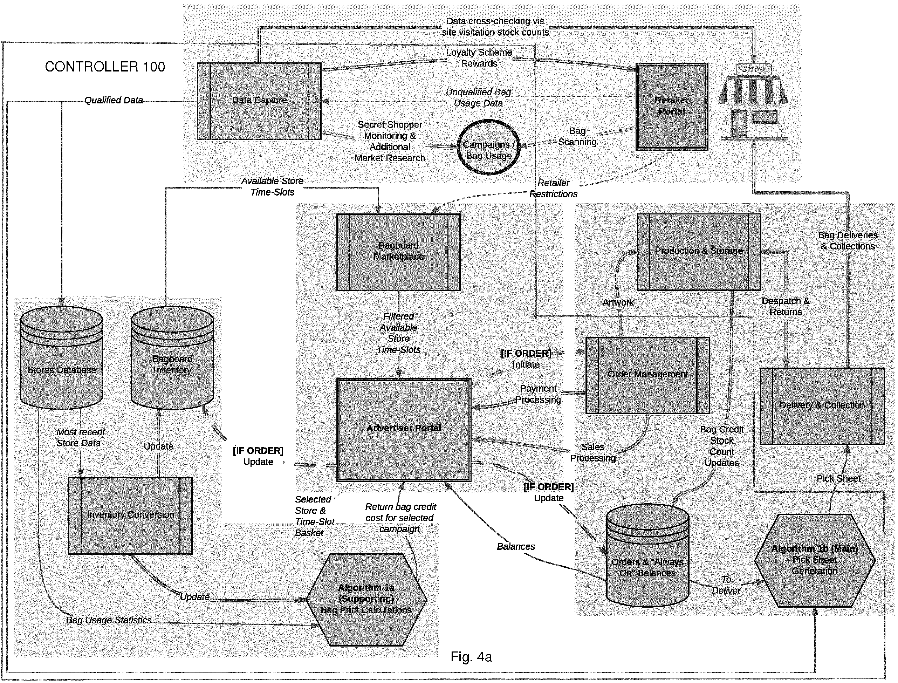

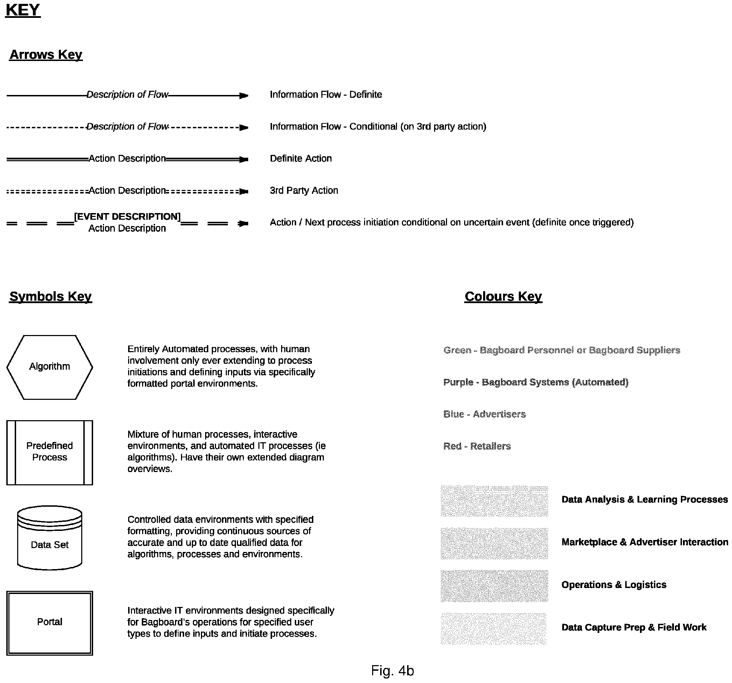

An example process flow chart for use with a system such as the example system of Fig. 2 is shown in Fig. 4a, and a key for the flow chart of Fig. 4a is shown in Fig. 4b.

In the example process flow chart shown in Fig. 4a, the "data capture" process, "inventory conversion" process, "order management" process and "Bagboard marketplace" process may be performed by the controller 100 described above with reference to the example system of Fig. 1. In addition, the "bag print" and "pick sheet generation" algorithms may be performed on the controller 100. Further, the "stores database" data set, "Bagboard inventory" data set and "orders and always on balances" data set may be stored on the controller 100.

In some examples, the retailer portal may be provided on a different piece of hardware, for example either via the cloud, to each retail outlet 125. In some examples, the "production and storage" process and "delivery and collection" process may be performed at a different physical location and/or on a different piece of hardware, such as by another controller at a print and distribution centre.

As can be seen in Fig. 4a, data sets comprising information indicating an update of the estimate of the lifespan of packs150 of bags are obtained from a retail outlet 125 via a data capture process. The data obtained from a retail outlet 125 may be obtained by scanning or reading a machine-readable identifier on a pack 150 of bags at a retail outlet 125. Optionally the data obtained from the retail may be cross-checked, for example, via "secret shopper" market research.

An advertiser portal is provided for an advertiser to interact with the distributor and bid for advertising timeslots according to a timing schedule. Based on this timing schedule, a controller may operate a method such as the method employing the algorithm described above to deliver bags carrying the adverts to selected retail outlets. The number of bags that need to be printed may also be determined and printed based on the number of packs of bags that are determined to be required.

In the context of the present disclosure other examples and variations of the apparatus and methods described herein will be apparent to a person of skill in the art. It will be appreciated from the discussion above that the embodiments shown in the Figures are merely exemplary, and include features which may be generalised, removed or replaced as described herein and as set out in the claims.

In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein.

The methods and apparatus outlined herein may be implemented using controllers and/or processors which may be provided by fixed logic such as assemblies of logic gates or programmable logic such as software and/or computer program instructions executed by a processor. Other kinds of programmable logic include programmable processors, programmable digital logic (e.g., a field programmable gate array (FPGA), an erasable programmable read only memory (EPROM), an electrically erasable programmable read only memory (EEPROM)), an application specific integrated circuit, ASIC, or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof.

Embodiments of the disclosure also provide computer program products, and computer readable media, such as tangible non-transitory media, storing instructions to program a processor to perform any one or more of the methods described herein.

## Claims

1. A computer-implemented method of delivering a series of messages across a distributed geographic area according to a timing schedule for the messages to control the timing of the delivery of the messages, wherein the distributed geographic area comprises a plurality of retail outlets, and wherein the series of messages are provided in packs each comprising a respective plurality of message-bearing articles, the method comprising:

   receiving a first data set comprising information representative of an estimated lifespan of a pack of message-bearing articles at a selected retail outlet, wherein the lifespan relates to a first selected time period;
   determining a first number of packs of message-bearing articles to distribute to the selected retail outlet based on the first data set;
   triggering the distribution of the first number of packs to the selected retail outlet;
   receiving a second data set indicating an update of the estimated lifespan of the first number of packs at the selected retail outlet;
   determining a second number of packs of message-bearing articles to distribute to the selected retail outlet over a second selected time period based on the second data set and the timing schedule; and
   triggering the distribution of the second number of packs to the selected retail outlet.

2. The method of claim 1 wherein the series of messages comprises at least a first message and a second message different from the first message, and wherein the timing schedule defines when to switch from the first message to the second message so that message-bearing articles carrying the second message are distributed to the retail outlets instead of message-bearing articles carrying the first message.

3. The method of claim 2 wherein the first number of packs of message-bearing articles bear the first message and wherein the second number of packs of message-bearing articles bear the second message.

4. The method of any of the previous claims wherein the second data set is obtained over at least a portion of the timing schedule.

5. The method of any of the previous claims wherein the first data set is obtained from a previous distribution of packs at the retail outlet.

6. The method claim 5 as dependent on claim 2 wherein the previous distribution of packs at the retail outlet is of packs comprising message-bearing articles bearing the first message.

7. The method of any of the previous claims wherein receiving the second data set comprises receiving consumption data indicating when selected packs of the first number of packs of message-bearing articles are used at the selected retail outlet, and optionally determining the time difference between the consumption of respective packs of the first number of packs of message-bearing articles at the selected retail outlet to determine the lifespan of the first number of packs.

8. The method of claim 7 wherein receiving information indicating when selected packs of the first number of packs of message-bearing articles are consumed at the selected retail outlet comprises receiving data obtained from a machine-readable identifier carried on the packs.

9. The method of any of the previous claims wherein determining the second number of packs comprises determining the number of message-bearing articles to distribute so that, based on the estimated lifespan of the first number of packs at the selected retail outlet and the timing schedule, the number of message-bearing articles remaining at the selected retail outlet at the end of the timing schedule is greater than a first threshold number of message-bearing articles but less than a second threshold number of message-bearing articles.

10. The method of any of the previous claims further comprising:

   receiving a third data set comprising information representative of an estimated lifespan of a first pack of message-bearing articles at other selected retail outlets from among the plurality of retail outlets, wherein the lifespan relates to the first selected time period;
   determining a first number of packs to distribute to each of the other selected retail outlets based on the third data set;
   receiving a fourth data set indicating an update of the estimated lifespan of the first number of packs at each of the other selected retail outlets;
   creating a master data set representative of the estimated lifespan of the first number of packs at each of the plurality of retail outlets based on the first, second, third and fourth data sets;
   determining a total number of packs to distribute to the plurality of retail outlets over the second selected time period based on the master data set and the timing schedule; and
   triggering the distribution of the packs to the plurality of retail outlets.

11. The method of claim 10, wherein determining the total number of packs of message-bearing articles to distribute is also based on the total number of message-bearing articles remaining at the beginning of the second selected time period.

12. The method of any of the previous claims wherein the message-bearing articles are bags, and wherein the messages are advertisements printed on the bags, optionally further comprising determining the total number of bags to print for all of the plurality of retail outlets for the second selected time period based on the master data set.

13. The method of any of the previous claims further comprising determining whether a delivery of a number of packs of message-bearing articles to a selected retail outlet is required based on the data indicating the estimated lifespan of the number of packs of message-bearing articles for the selected retail outlet.

14. A system for distributing a series of messages across a distributed geographic area, the system comprising:

   a controller configured to perform the method of claim 8;
   a plurality of packs of message-bearing articles, wherein each pack comprises a machine-readable identifier; and
   a reader for obtaining data from the machine-readable identifier carried on the packs to provide the consumption data, wherein the reader is configured to send the consumption data obtained from the machine-readable identifier to the controller.

15. A computer readable non-transitory storage medium comprising a program for a computer configured to cause a processor to perform the method of any of claims 1 to 13.

Fig. 1

Warehouse
500

Packs of
message – bearing
articles
150

Identifier on pack of
message – bearing
articles
155

Consumption data
129

Controller
100

Reader sends data to
controller to provide
consumption data
129

Pack of message – bearing
articles
150

Reader
127

Message – bearing
article
160

Retail outlet
125

Pack of message –
bearing articles
150

Truck for distributing pack
of message – bearing
articles to retail outlets
200

Reader
127

Message – bearing
article
160

Retail outlet
125

Fig. 2

Start — 700

Receive first data set comprising information representative of estimated lifespan at retail outlet — 702

Determine number of packs to distribute to retail outlet — 704

Trigger distribution — 706

Receive second data set indicating an update of the estimated lifespan — 708

Determine second number of packs to distribute to retail outlet based on second data set and timing schedule for messages — 710

Trigger distribution of packs to retail outlet — 712

Fig. 3

Fig. 4a

# KEY

## Arrows Key

——————————Description of Flow——————————▶  Information Flow - Definite

– – – – – – – – –Description of Flow– – – – – – –▶  Information Flow - Conditional (on 3rd party action)

═══════════Action Description══════════▶  Definite Action

:=============Action Description:===========▶  3rd Party Action

═ ══ ══[EVENT DESCRIPTION]══ ══ ▶  Action / Next process initiation conditional on uncertain event (definite once triggered)
        Action Description

## Symbols Key

Algorithm — Entirely Automated processes, with human involvement only ever extending to process initiations and defining inputs via specifically formatted portal environments.

Predefined Process — Mixture of human processes, interactive environments, and automated IT processes (ie algorithms). Have their own extended diagram overviews.

Data Set — Controlled data environments with specified formatting, providing continuous sources of accurate and up to date qualified data for algorithms, processes and environments.

Portal — Interactive IT environments designed specifically for Bagboard's operations for specified user types to define inputs and initiate processes.

## Colours Key

Green - Bagboard Personnel or Bagboard Suppliers

Purple - Bagboard Systems (Automated)

Blue - Advertisers

Red - Retailers

Data Analysis & Learning Processes

Marketplace & Advertiser Interaction

Operations & Logistics

Data Capture Prep & Field Work

Fig. 4b

Europäisches
Patentamt

European
Patent Office

Office européen
des brevets

# EUROPEAN SEARCH REPORT

**Application Number**

EP 17 18 7587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is so well-known that its existence at the relevant date cannot reasonably be disputed. The claimed technical feature, namely a computer, is therefore considered to be part of the notorious knowledge, for which no documentary evidence is deemed necessary (see Guidelines for Examination in the European Patent Office, B-VIII, 2.2.1). ----- | | INV. G06Q10/08 G06Q30/02 |
| | | | **TECHNICAL FIELDS SEARCHED (IPC)** |
| | | | G06Q |

The present search report has been drawn up for all claims

| Place of search | Date of completion of the search | Examiner |
|---|---|---|
| The Hague | 17 October 2017 | Tiago Pinheiro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

      .............................................................................................
& : member of the same patent family, corresponding document

EPO FORM 1503 03.82 (P04C01)